(19) **Europäisches Patentamt**
**European Patent Office**
**Office européen des brevets**

(11) **EP 3 780 552 B1**

(12) **EUROPEAN PATENT SPECIFICATION**

(45) Date of publication and mention
of the grant of the patent:
**22.03.2023 Bulletin 2023/12**

(21) Application number: **19792098.6**

(22) Date of filing: **01.04.2019**

(51) International Patent Classification (IPC):
***H04L 61/2514*** *(2022.01)*     ***H04L 61/2517*** *(2022.01)*
***H04L 45/02*** *(2022.01)*     ***H04L 45/50*** *(2022.01)*

(52) Cooperative Patent Classification (CPC):
**H04L 45/04; H04L 61/2514; H04L 61/2517;**
H04L 45/50; H04L 67/1023

(86) International application number:
**PCT/CN2019/080706**

(87) International publication number:
**WO 2019/205892 (31.10.2019 Gazette 2019/44)**

(54) **MESSAGE PROCESSING METHOD IN DISTRIBUTED DEVICE AND DISTRIBUTED DEVICE**

NACHRICHTENVERARBEITUNGSVERFAHREN IN VERTEILTER VORRICHTUNG SOWIE
VERTEILTE VORRICHTUNG

PROCÉDÉ DE TRAITEMENT DE MESSAGE DANS UN DISPOSITIF DISTRIBUÉ, ET DISPOSITIF
DISTRIBUÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2018   CN 201810399892**

(43) Date of publication of application:
**17.02.2021   Bulletin 2021/07**

(73) Proprietor: **HUAWEI TECHNOLOGIES CO., LTD.
Shenzhen, Guangdong 518129 (CN)**

(72) Inventor: **XIONG, Ying
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
**EP-A2- 1 434 406       CN-A- 104 580 550
CN-A- 107 948 076       US-A1- 2010 061 380
US-A1- 2017 078 245**

## Description

### TECHNICAL FIELD

This application relates to the field of computers and communications technologies, and in particular, to a packet processing method in a distributed device and a distributed device.

### BACKGROUND

As packet forwarding nodes, a growing number of network devices use a distributed processing architecture to improve a processing capability of packet forwarding devices. The distributed processing architecture expands performance in a scale-out manner, that is, improves performance by increasing a quantity of parallel processing units having a similar function in a device. The network device using the distributed processing architecture includes but is not limited to a router, a switch, a firewall, a server load balancer, and the like.

However, there is a specific limitation in an application scenario of the distributed processing architecture, and the limitation is reflected in a strong correlation between an effect of device performance improvement and a property of data on which the network device operates in dependence. Data on which the router or the switch operates in dependence is mainly a routing table (English: Routing Info Base, RIB) and a forwarding table (English: Forward Information Base, FIB). The routing table and the forwarding table mainly store network topology information. Characteristics of data stored in the routing table and the forwarding table are a relatively low change speed (changes are usually in seconds) and a relatively small amount (a quantity of entries in the routing table ranges from tens of thousands to hundreds of thousands, and a quantity of entries in the forwarding table is smaller). The router or the switch can operate normally by synchronously replicating a routing table, a forwarding table or a MAC forwarding table on each processing unit included in the router or the switch.

However, for some other network devices that operate in dependence on data that has a high change speed or a large amount, the scale-out effect is limited. The reason is that if the network device uses the distributed processing architecture, the network device needs to synchronously replicate one piece of data on each processing unit included in the network device. The process causes the network device to consume a large quantity of processing resources and storage resources to synchronize and maintain data respectively stored in the plurality of processing units. For example, data on which a firewall device or the server load balancer (English: Server Load Balancer, SLB) operates in dependence is mainly a session table. It may be understood that, when the network topology does not change, a large quantity of different sessions may be repeatedly or simultaneously established between the devices within a period of time, where operations of establishing, refreshing, and deleting a session entry are included. Therefore, the change speed and the amount of the data included in the session table are both far greater than the change speed and the amount of the data included in the routing table and the forwarding table. Because the session table has characteristics of a large amount of data and a high change speed of data, the network device cannot synchronously replicate one complete piece of data on each processing unit included in the network device, and the session table can only be stored on different processing units in a distributed manner. In this case, if an uplink data stream and a corresponding downlink data stream are offloaded to different processing units by an offloading unit in the network device, a processing unit configured to process the downlink data stream cannot process the downlink data stream because no session entry is stored.

To offload a data flow and a corresponding reverse data flow to a same processing unit in the network device, how to design a universally applicable packet processing solution for the distributed network device that operates in dependence on the data that has a high change speed or a large amount is a key problem that affects processing performance of a distributed device.

Document US 2010/061380 A1 discloses an apparatus, comprising: one or more network interfaces configured for receiving and sending packets; n network address translation (NAT) processors configured to perform network address translations independently of each other; with each of said n NAT processors being assigned a predetermined, non-overlapping space of translated source addresses used by said n NAT processors; with each of said n NAT processors being configured to: translate non-translated packets to use source addresses from its said assigned space of translated source addresses, and to translate received translated packets with destination addresses in its said assigned space of translated source addresses; and with n being an integer greater than one; and one or more distributors configured for distributing packets of streams of received non-NAT-translated packets and received NAT-translated packets to said n NAT processors for performing said network address translation, wherein all packets of each particular stream of said received non-translated packets are distributed to the same NAT processor of said n NAT processors according to a predetermined mapping of each source of said received non-translated packets uniquely to one of said n NAT processors; and wherein received NAT-translated packets are distributed to a NAT processor of said n NAT processors according to said assigned spaces of translated source addresses; and wherein corresponding streams of said received non-NAT-translated packets and received NAT-translated packets are distributed to the same NAT processor of said n NAT processors.

Document US 2017/078245 A1 discloses a network device, comprising: one or more processors to: receive a call from a services processor to allocate network address translation resources for a data packet; determine an identifier associated with the services processor; and allocate network address translation resources using a network address port translation manager based on the identifier, the network address translation port manager being a two-level port bitmap management system that determines a translated source port for the data packet.

## SUMMARY

This application provides a packet processing method in a distributed device, to resolve a problem in the prior art that packet processing fails when a data flow and a corresponding reverse data flow cannot be offloaded to a same processing unit in a distributed device.

According to a first aspect, a packet processing method in a distributed device is provided. The distributed device is deployed between a first network and a second network, the distributed device includes a first offloading unit, a second offloading unit, and at least two processing units, each processing unit in the at least two processing units is coupled to the first offloading unit and the second offloading unit, and the method includes:

   receiving, by the first offloading unit, a first packet from the first network, and selecting, based on a data flow identifier of the first packet and a first offloading algorithm, a first processing unit from the at least two processing units, where the data flow identifier of the first packet includes at least a source Internet Protocol IP address, a destination IP address, a source port number, and a destination port number of the first packet;
   sending, by the first offloading unit, the first packet to the first processing unit;
   allocating, by the first processing unit, an IP address and a port number to the first packet, where the allocated port number satisfies a condition: Based on a data flow identifier of a reverse packet of an address-translated first packet and a second offloading algorithm, a second processing unit selected from the at least two processing units is a same processing unit as the first processing unit, a source port number of the address-translated first packet is the allocated port number, one of a source IP address and a destination IP address of the address-translated first packet is the allocated IP address, and the second offloading algorithm is an algorithm used by the second offloading unit to offload the reverse packet of the address-translated first packet;
   performing, by the first processing unit, address translation on the first packet, to obtain the address-translated first packet, where the address translation includes replacing the source port number of the first packet with the allocated port number;
   sending, by the first processing unit, the address-translated first packet to the second offloading unit; and
   sending, by the second offloading unit, the address-translated first packet to the second network. Further, the second offloading algorithm includes inputting a source IP address, a destination IP address, a source port number and a protocol number of an input packet and a first port number into a predetermined hash algorithm based on an order indicated by a first manner, performing summation on a result of the hash algorithm and an adjustable value, performing, by a result of the summation, modulo operation on N, and using a processing unit corresponding to a result of the modulo operation as a selected processing unit, where the adjustable value is a difference obtained by subtracting the first port number from a destination port number of the input packet, N is a quantity of the processing units included in the distributed device, and the at least two processing units respectively correspond to values in a range of 0 to N-1.

When the processing unit in the distributed device provided in this embodiment of this application allocates a source address to a packet, the offloading unit offloads the reverse packet of the address-translated packet to the processing unit by using the allocated source address, so that the same processing unit in the distributed device processes a two-way packet of a same session. This avoids a problem that packet processing fails when different processing units in the distributed device process the two-way packet of the same session.

In a possible implementation, the first network is a private network, the second network is a public network, and the allocating, by the first processing unit, an IP address and a port number to the first packet includes:

   allocating, by the first processing unit, a pre-configured public network IP address to the first packet as the allocated IP address;
   selecting, by the first processing unit from a port number segment corresponding to the first processing unit, a port number as a second port number, where the first processing unit allocates a same IP address as another processing unit in the at least two processing units, and the port number segment corresponding to the first processing unit does not overlap a port number segment corresponding to the another processing unit in the at least two processing units;

inputting, by the first processing unit, a source IP address, a destination IP address and a destination port number of the address-translated first packet and the second port number into the predetermined hash algorithm based on an order indicated by a second manner, to obtain a result of a hash operation, where the source IP address of the address-translated first packet is the allocated IP address, the source IP address based on the order indicated by the second manner has a same location as the destination IP address based on the order indicated by the first manner, the destination IP address based on the order indicated by the second manner has a same location as the source IP address based on the order indicated by the first manner, and the destination port number based on the order indicated by the second manner has a same location as the source port number based on the order indicated by the first manner;

calculating, by the first processing unit, a result of modulo operation performed by the result of the hash operation on N;

calculating, by the first processing unit, a difference between the result of the modulo operation and a value in a range of 0 to N-1 corresponding to the first processing unit; and

allocating, by the first processing unit, a sum of the second port number and the difference to the first packet as the allocated port number.

In this embodiment of this application, a concept of the adjustable value is introduced when the second offloading algorithm is designed. A function of the adjustable value is that when the first processing unit allocates the port number, an adjustable value that satisfies a condition is extrapolated based on a known offloading result by using a method corresponding to the offloading algorithm, so that a port number that satisfies a condition is finally determined based on the adjustable value. The introduction of the adjustable value to the offloading algorithm is a technology-level innovation that improves efficiency of calculating the port number that satisfies the condition. Further, the processing units in the distributed device may share a same public network IP address, thereby saving address resources.

In a possible implementation, the selecting, from a corresponding port number segment, a port number as a second port number includes:

dividing, by the first processing unit, the port number segment into at least one port number group in a manner that a predetermined quantity of port numbers are grouped into one group; and

selecting a port number group randomly from the at least one port number group, and determining a port number at a predetermined location in the selected port number group as the second port number.

In a possible implementation, the selecting, from a corresponding port number segment, a port number as a second port number includes:

grouping continuous port numbers starting from a reserved port number into at least one port number group, where the last three digits of the first port number in the at least one port number group are 0 when the first port number is expressed in hexadecimal; and

selecting a port number group randomly from the at least one port number group, and determining a port number at a predetermined location in the selected port number group as the second port number.

In a possible implementation, in a scenario in which the first network is the private network and the second network is the public network, the address translation further includes replacing the source IP address of the first packet with the allocated IP address.

In a possible implementation, the first offloading algorithm is the same as the second offloading algorithm. In this case, two offloading units in the distributed device use the same algorithm, so that the first packet and the reverse packet of the address-translated first packet are offloaded by using the same algorithm. Storage resources occupied by different offloading units to store a plurality of offloading algorithms are saved, and an offloading process is simplified.

In a possible implementation, an input packet of the first offloading algorithm is the first packet, and the selecting, based on a data flow identifier of the first packet and a first offloading algorithm, a first processing unit from the at least two processing units includes:

determining, by the first offloading unit, the first port number and the adjustable value;

inputting the source IP address, the destination IP address, and the source port number of the first packet and the first port number into the predetermined hash algorithm based on the order indicated by a first manner; and

performing summation on a result of the hash algorithm and the adjustable value, performing, by a result of the summation, modulo operation on N, and using a processing unit corresponding to a result of the modulo operation as the first processing unit.

In a possible implementation, the determining the first port number and the adjustable value includes:

grouping continuous port numbers starting from a reserved port number to the destination port number of the first packet into at least one port number group in a manner that a predetermined quantity of port numbers are grouped into one group;

determining a port number at a predetermined location before the destination port number in a port number group in which the destination port number of the first packet is located as the first port number; and

determining the adjustable value as a difference obtained by subtracting the first port number from the destination port number of the first packet.

In a possible implementation, the determining the first port number and the adjustable value includes:

grouping continuous port numbers starting from a reserved port number into at least one port number group, where the last three digits of the first port number in the at least one port number group are 0 when the first port number is expressed in hexadecimal;

determining a port number at a predetermined location before the destination port number in a port number group in which the destination port number of the first packet is located as the first port number; and

determining the adjustable value as a difference obtained by subtracting the first port number from the destination port number of the first packet.

In a possible implementation, in a scenario in which the first network is a public network and the second network is a private network, the first packet is a packet from the public network, and the allocating, by the first processing unit, an IP address and a port number to the first packet includes:

selecting, by the first processing unit based on a load balancing policy, a first address port pair from at least one address port pair that is stored, where the first address port pair includes a private network IP address and a port number;

allocating, by the first processing unit, the private network IP address in the first address port pair to the first packet as the allocated IP address;

determining, by the first processing unit, the second port number based on the source port number of the first packet;

inputting, by the first processing unit, the source IP address, the destination IP address and a destination port number of the address-translated first packet and the second port number into the predetermined hash algorithm based on an order indicated by a second manner, to obtain a result of a hash operation, where one of destination IP addresses of the address-translated first packet is the allocated IP address, the destination port number of the address-translated first packet is the port number in the first address port pair, the source IP address based on the order indicated by the second manner has a same location as the destination IP address based on the order indicated by the first manner, the destination IP address based on the order indicated by the second manner has a same location as the source IP address based on the order indicated by the first manner, and the destination port number based on the order indicated by the second manner has a same location as the source port number based on the order indicated by the first manner;

calculating, by the first processing unit, a result of modulo operation performed by the result of the hash operation on N;

calculating, by the first processing unit, a difference between the result of the modulo operation and a value in a range of 0 to N-1 corresponding to the first processing unit; and

allocating, by the first processing unit, a sum of the second port number and the difference to the first packet as the allocated port number.

In a possible implementation, an input packet of the first offloading algorithm is the first packet, and the selecting, based on a data flow identifier of the first packet and a first offloading algorithm, a first processing unit from the at least two processing units includes:

determining, by the first offloading unit, the first port number and the adjustable value;

inputting the source IP address, the destination IP address, and the source port number of the first packet and the first port number into the predetermined hash algorithm based on the order indicated by the first manner; and

performing summation on a result of the hash algorithm and the adjustable value, performing, by a result of the summation, modulo operation on N, and using a processing unit corresponding to a result of the modulo operation as the first processing unit.

In a possible implementation, in a scenario in which the first network is the public network and the second network is the private network, the address translation further includes: replacing the destination IP address of the first packet with the private network IP address in the first address port pair, and replacing the destination port number of the first packet with the port number in the first address port pair.

In a possible implementation, a third processing unit is a same processing unit as the first processing unit, and the third processing unit is a processing unit selected from the two processing units based on the data flow identifier of the reverse packet of the first packet and the second offloading algorithm. In other words, the second offloading algorithm is a symmetric algorithm, so that the first processing unit does not need to determine the scenario when allocating the port number to the first packet, that is, does not need to determine whether the first packet is a packet sent by the private network to the public network or a packet sent by the public network to the private network, thereby further simplifying the offloading process and improving offloading efficiency.

In a possible implementation, the second offloading algorithm further includes performing, by the hash algorithm, logical exclusive OR on the source IP address, the destination IP address, the source port number, the protocol number and the first port number that are input, and outputting a result of the logical exclusive OR; or performing, by the hash algorithm, byte-by-byte summation on the source IP address, the destination IP address, the source port number, the protocol number and the first port number that are input, and outputting a result of the byte-by-byte summation.

In a possible implementation, after the allocating, by the first processing unit, an IP address and a port number to the first packet, the method further includes: establishing, by the first processing unit, a mapping entry, where the mapping entry includes the data flow identifier of the first packet before the address translation and a data flow identifier of the address-translated first packet, and the mapping entry is used to perform the address translation on a second packet subsequently received by the first processing unit. The first processing unit performs, based on the established mapping entry, address translation on the subsequent packet of the data flow to which the first packet belongs, and does not need to allocate the port number to each packet, thereby improving processing efficiency.

According to a second aspect, a distributed device is provided. The distributed device is configured to perform the method according to the first aspect or any possible implementation of the first aspect. Specifically, the distributed device includes units configured to perform the method according to the first aspect or any possible implementation of the first aspect. The units may be implemented by using a program module, or may be implemented by using hardware or firmware. For details, refer to the specific description in the embodiments, and the details are not described herein again.

According to a third aspect, a distributed device is further provided. The distributed device is deployed between a first network and a second network, and the distributed device includes a first offloading unit, a second offloading unit, and at least two processing units.

The first offloading unit includes a network interface and a processor. The network interface and the processor are configured to cooperate with each other, to implement the steps performed by the first offloading unit according to the first aspect or any possible implementation of the first aspect. For details, refer to the specific description in the method examples, and the details are not described herein again.

A first processing unit in the at least two processing units includes a network interface and a processor. The network interface and the processor are configured to cooperate with each other, to implement the steps performed by the first processing unit according to the first aspect or any possible implementation of the first aspect. For details, refer to the specific description in the method examples, and the details are not described herein again.

The second offloading unit includes a network interface and a processor. The network interface and the processor are configured to cooperate with each other, to implement the steps performed by the second offloading unit according to the first aspect or any possible implementation of the first aspect. For details, refer to the specific description in the method examples, and the details are not described herein again.

According to a fourth aspect, a computer storage medium is provided, and is configured to store a computer software instruction used by the distributed device, and the computer storage medium includes a program designed to implement the first aspect or any possible implementation of the first aspect.

According to a fifth aspect, a computer program product including an instruction is provided. When the computer program product is run on a computer, the computer is enabled to perform the method according to the first aspect or any possible implementation of the first aspect.

## BRIEF DESCRIPTION OF DRAWINGS

To describe the technical solutions in the embodiments of this application more clearly, the following briefly describes the accompanying drawings required for describing the embodiments. Apparently, the accompanying drawings in the following description show some embodiments of this application, and a person of ordinary skill in the art may still derive other drawings from these accompanying drawings without creative efforts.

FIG. 1 is a schematic diagram of a deployment and a structure of a typical NAT device according to an embodiment of this application;

FIG. 2 is a schematic diagram of an application scenario of a packet processing method in a distributed device according to an embodiment of this application;

FIG. 3 is a schematic structural diagram of an offloading unit in a distributed device according to an embodiment of this application;

FIG. 4 is a schematic structural diagram of a processing unit in a distributed device according to an embodiment of this application;

FIG. 5 is a flowchart of a packet processing method according to an embodiment of this application;

FIG. 6 is a schematic diagram of a scenario in which a NAT device processes an upstream packet and a corresponding downstream packet by using a packet processing method provided in an embodiment of this application when a local area network user initiates access to a service provided by the Internet according to an embodiment of this application;

FIG. 7A and FIG. 7B are a schematic diagram of a NAT device performing a packet processing method in the scenario shown in FIG. 6 according to an embodiment of this application;

FIG. 8 is a schematic diagram of a scenario in which an SLB device processes an upstream packet and a corresponding downstream packet by using a packet processing method provided in an embodiment of this application when an Internet user accesses a service provided by a server in a local area network according to an embodiment of this application;

FIG. 9A and FIG. 9B are a schematic diagram of an SLB device performing a packet processing method in the scenario shown in FIG. 8 according to an embodiment of this application; and

FIG. 10 is a schematic structural diagram of a distributed device according to an embodiment of this application.

## DESCRIPTION OF EMBODIMENTS

Because network devices such as a firewall device and an SLB operate in dependence on data that has a high change speed or a large amount, making it difficult for the network device to synchronously replicate one complete piece of data on each processing unit included in the network device, a distributed processing architecture is not applicable to these devices. In addition, a conventional offloading algorithm applied to the network device makes it difficult for different offloading units to allocate an uplink data stream and a corresponding downlink data stream to a same processing unit for processing. Consequently, the processing unit may fail to process because no corresponding session entry is stored in the processing unit.

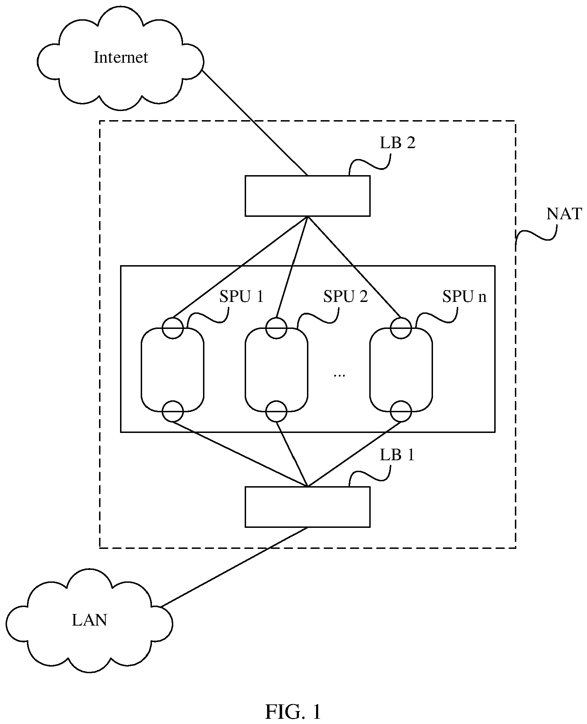

The conventional offloading algorithm is simple. For example, a hash operation is performed on elements in a data flow identifier (for example, a quintet) of a to-be-offloaded packet, and modulo operation is performed on a result of the operation. The reason why the conventional offloading algorithm makes it difficult for different offloading units to allocate the uplink data stream and the corresponding downlink data stream to the same processing unit for processing is that in the foregoing scenario, the processing unit performs address translation on a data flow, and a quintet of the data flow may change after the address translation. Therefore, a result of offloading, by an offloading unit, the data flow before the address translation is possibly different from a result of offloading, by another offloading unit, the data flow after the address translation. FIG. 1 is a schematic diagram of a deployment and a structure of a typical network address translation (English: network address translation, NAT) NAT device. The NAT device includes two offloading units: an LB 1 and an LB 2 respectively, and a plurality of processing units: an SPU 1, an SPU 2, ..., and an SPU n respectively. The LB 1 is connected to a private network, and the private network may be a local area network (English: local area network, LAN). The LB 2 is connected to a public network, and the public network may be the Internet. When a host in the private network wants to access a server in the public network, an access request packet is sent to the public network. The LB 1 offloads, based on an offloading algorithm, the access request packet to the SPU 1 for processing. After performing address translation on the access request packet and establishing an address mapping table and a session entry, the SPU 1 sends an address-translated request packet to the public network by using the LB 2, and the LB 2 sends the address-translated request packet to the public network. The address mapping table stores a correspondence between a data flow identifier of an access request packet before address translation and a data flow identifier of the access request packet after address translation.

When receiving a downstream packet corresponding to the access request packet, the LB 2 offloads, based on an offloading algorithm, the downstream packet to the SPU 2 for processing. In the embodiments of this application, to simply differentiate data flows in different directions, a packet sent by the private network to the public network is briefly referred to as an upstream packet, and a packet sent by the public network to the private network is briefly referred to as a downstream packet. However, because the SPU 2 does not store the address mapping relationship, the SPU 2 cannot perform address translation on the downstream packet, and cannot send, through the LB 1, an address-translated downstream packet to the host that initiates network access in the private network.

An embodiment of this application provides a packet processing method in a distributed device. According to the packet processing method, a packet processing procedure and an offloading algorithm applied to the packet processing procedure are improved, so that the upstream packet and the corresponding downstream packet are offloaded to a same processing unit for processing. This avoids a problem that the packet processing fails when no address mapping entry or session entry is stored in the processing unit. Specifically, after an offloading unit offloads a received session packet to a processing unit, when the processing unit that receives the session packet allocates a port number as an address-translated source port number in an address translation process, the allocated port number needs to satisfy the following condition: If the other offloading unit offloads a reverse packet by using a same offloading solution, the reverse packet is still offloaded to the processing unit.

Main implementation principles and specific implementations of the technical solutions in the embodiments of the present invention, and corresponding beneficial effects that the technical solutions in the embodiments of the present invention can achieve are described in detail below with reference to the accompanying drawings.

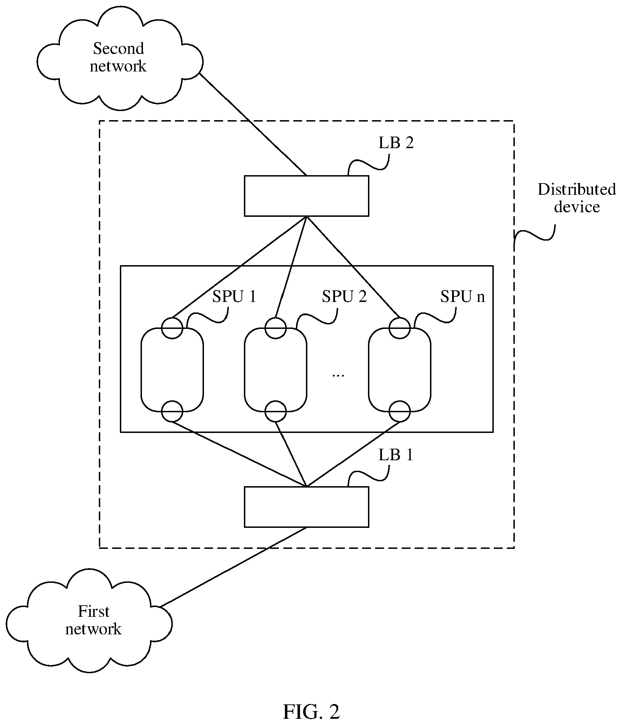

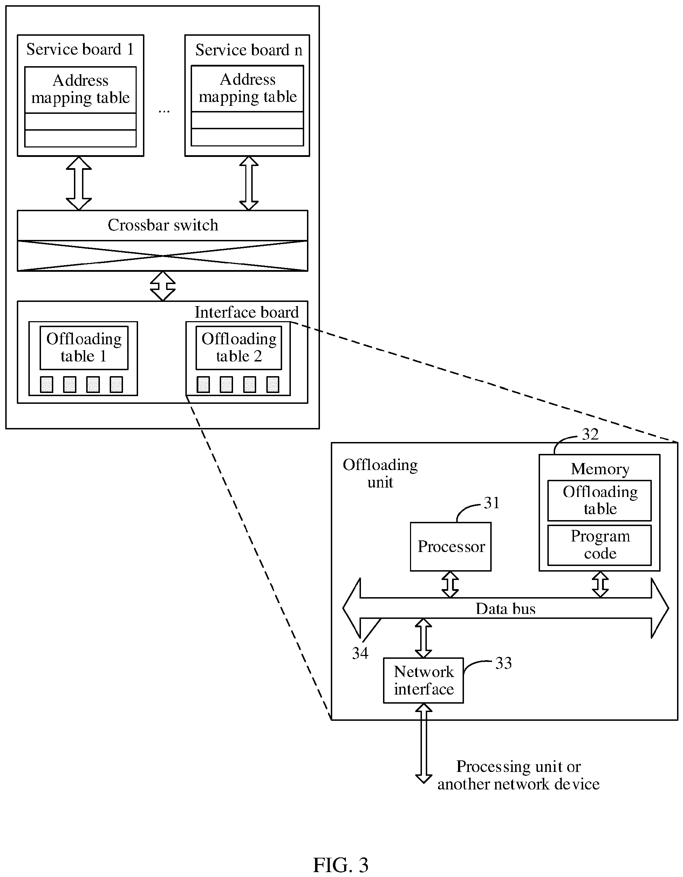

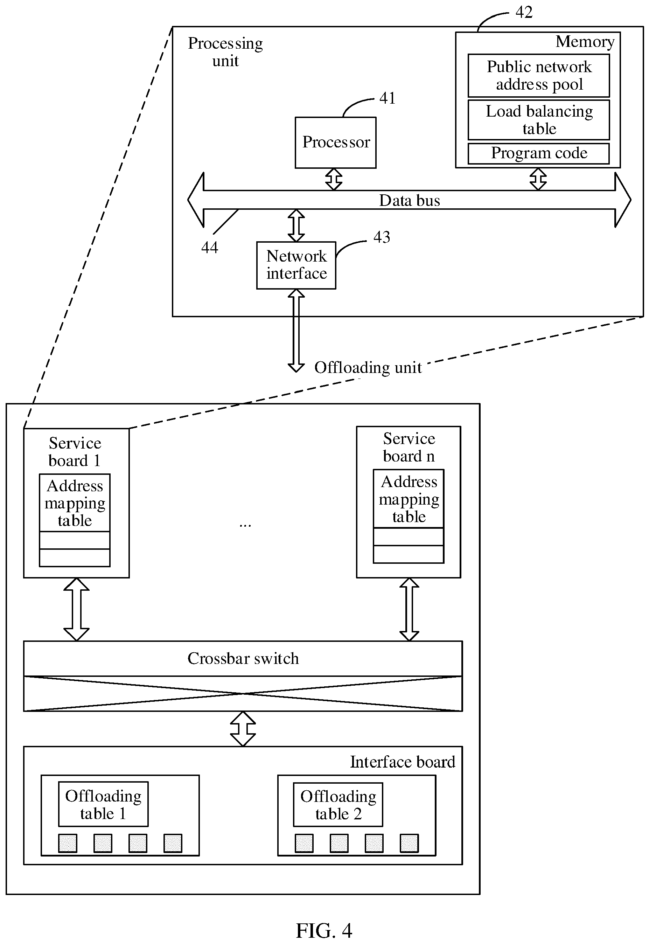

A network scenario applied to the embodiments of this application is shown in FIG. 2. A distributed device in FIG. 2 may be various devices using a distributed processing architecture, including but not limited to a NAT device, a firewall device, an SLB, a carrier-grade NAT (English: carrier-grade NAT, CGN) device, an IPv6 transition address translation device, or the like. The distributed device includes two offloading units: an LB 1 and an LB 2 respectively, and a plurality of processing units: an SPU 1, an SPU 2, ..., and an SPU n respectively. The LB 1 is connected to a private network, and the private network may be a local area network (English: Local Area Network, LAN). The LB 2 is connected to a public network, and the public network may be the Internet. As shown in FIG. 3 or FIG. 4, an offloading unit and a processing unit in the distributed device may be different cards inserted into a same subrack and interconnected through a switch board of the subrack, for example, a crossbar switch (crossbar switch), where the switch board functions as a switch, to exchange packets among the plurality of cards in the same subrack. In addition, when the offloading unit and the processing unit are different cards, the offloading unit may alternatively be coupled to the processing unit by using a standard Ethernet, where the standard Ethernet is an Ethernet in which a physical layer and a data link layer are implemented based on Institute of Electrical and Electronics Engineers (Institute of Electrical and Electronics Engineers, IEEE) 802.3 series standards and provisions.

In a conventional solution, an offloading algorithm applied to the offloading unit (for example, the LB 1 or the LB 2 in FIG. 1 or FIG. 2) may be a hash algorithm. The hash algorithm is denoted as HASH1, and specifically: target processing unit identifier = HASH1(X1, X2, X3, X4, X5) MOD (N). X1, X2, X3, X4, and X5 are elements in the data flow identifier. For example, it is assumed that the data flow identifier is a quintet <source IP address, destination IP address, source port, destination port, protocol type>, where X1 is the source IP address in the quintet, X2 is the destination IP address in the quintet, X3 is the source port in the quintet, X4 is the destination port in the quintet, X5 is a transport layer protocol type in the quintet, and N is a quantity of processing units in the distributed device. An algorithm indicated by HASH1 may be a common hash algorithm, capable of mapping different inputs to a hash value in a finite value space provided that a basic discreteness requirement is satisfied. Because different inputs may be mapped to a same hash value, a unique input value cannot be determined based on the hash value. For example, the hash algorithm may include performing an exclusive OR operation on elements in X1 to X5, and then performing modulo operation on a result of the exclusive OR operation.

The packet processing method provided in the embodiments of this application includes improvements in at least two aspects. First, the offloading algorithm is applied to both the offloading unit and the processing unit, instead of being applied only to the offloading unit and not to the processing unit as in the conventional solution. Further, the offloading algorithm is improved, and the improved offloading algorithm is denoted as HASH2. When the processing unit allocates a source port number to a packet, an analog offloading unit performs similar offloading processing on a reverse packet of an address-translated packet, to ensure that the allocated source port number can enable the reverse packet to be offloaded to the processing unit, thereby calculating a source port number that satisfies the condition.

The improved offloading algorithm includes inputting a source IP address, a destination IP address, a source port number and a protocol number of an input packet and a first port number into a predetermined hash algorithm based on an order indicated by a first manner, performing summation on a result of the hash algorithm and an adjustable value, performing, by a result of the summation, modulo operation on N, and using a processing unit corresponding to a result of the modulo operation as a selected processing unit. The adjustable value is a difference obtained by subtracting the first port number from a destination port number of the input packet, and N is a quantity of processing units included in the distributed device. Because the improved offloading algorithm finally outputs a result of the modulo operation on N, a value in a range of 0 to N-1 is output by the improved offloading algorithm, that is, a value space of an output result of the improved offloading algorithm is 0 to N-1. Processing units in a distributed network device respectively correspond to values in a range of 0 to N-1.

An original objective of designing the improved offloading algorithm is to easily calculate a port number that satisfies the condition.

In the improved offloading algorithm, the destination port number is split into a first port number and an adjustable value. Similarly, when the reverse packet of the input packet is offloaded by using a same offloading algorithm, a destination port number of the reverse packet (a source port number of a translated input packet) is split into a second port number and an adjustable value. In this way, a process of allocating the port number is actually transformed into a process of extrapolating, based on the reverse packet of the input packet, an adjustable value that satisfies the condition after an offloading result is known. After the adjustable value is calculated, a to-be-allocated port number is calculated based on the calculated adjustable value, so that the to-be-allocated port number can be quickly calculated based on a calculation formula. Compared with an exhaustive testing manner that all possible port numbers are sequentially substituted into the offloading algorithm to determine whether the port number satisfies the condition, the solution provided in the embodiments of this application has significantly higher efficiency.

Assuming that the improved offloading algorithm is expressed by HASH2, and an existing hash algorithm is expressed by HASH1, an operating principle of the offloading algorithm may be described as follows:

for a packet input into the offloading algorithm, assuming that a data flow identifier that is expressed by a quintet and that is extracted from a packet header is <source IP address, destination IP address, source port, destination port, protocol type>,
value corresponding to the target processing unit = HASH2(X1, X2, X3, X4, X5) MOD (N) = (HASH1(X1, X2, X3, NewPort1, X5) + NewPort2) MOD (N). X1 to X5 still respectively represent the elements in the quintet of the data flow identifier, where X1 is the source IP address in the quintet, X2 is the destination IP address in the quintet, X3 is a source port number in the quintet, X4 is a destination port number in the quintet, X5 is the protocol type in the quintet, and N is a quantity of the processing units in the distributed device.

NewPort1 is the first port number, NewPort2 is the adjustable value, and X4 = NewPort1 + NewPort2.

Optionally, if NewPort1 is calculated based on X4, NewPort1 is denoted as NewPort1 (X4).

Optionally, if the data flow identifier further includes more optional elements, adaptive expansion may alternatively be performed on the offloading algorithm. For example, the data flow identifier is a sextuple <source IP address, destination IP address, source port, destination port, protocol type, extension element>, where the extension element may be an identifier of a local area network or an identifier of a virtual private network (English: virtual private network, VPN). The identifier of the local area network may be denoted as VLAN-ID, and the identifier of the virtual private network is denoted as VPN-ID.

Correspondingly, target processing unit identifier = HASH2(X1, X2, X3, X4, X5, X6) MOD (N) = (HASH1(X1, X2, X3, NewPort1, X5, X6) + NewPort2) MOD (N), where X1 to X5 have same meanings as described above, and X6 is VLAN-ID or VPN-ID.

Similarly, if the data flow identifier further includes more optional elements, similar expansion may alternatively be performed on the offloading algorithm.

A structure of the offloading unit LB 1 or LB 2 in FIG. 2 is shown in FIG. 3. The offloading unit includes a processor 31, a memory 32, and a network interface 33, and the memory 32 and the network interface 33 are interconnected by using a data bus 34.

Optionally, the processor 31 is one or more processors, and may also be a network processor (NP, Network Processor).

The memory 32 includes but is not limited to a random access memory (random access memory, RAM), a read-only memory (ROM), an erasable programmable read-only memory (EPROM or flash memory), or a portable read-only memory (CD-ROM). The memory 32 is configured to store an offloading table, and the offloading table records a correspondence between a data flow identifier and a processing unit identifier. After receiving a packet from another network device, the offloading unit first extracts a data flow identifier of the packet from a packet header, and queries, in the offloading table, whether the data flow identifier already exists. If the data flow identifier exists in the offloading table, the offloading unit obtains a processing unit identifier corresponding to the data flow identifier from the offloading table, and sends the packet to a processing unit indicated by the processing unit identifier. If the data flow identifier does not exist in the offloading table, the offloading unit obtains an output result of the offloading algorithm based on the data flow identifier and the offloading algorithm. The output result indicates a processing unit in the distributed device. The offloading unit sends the packet to the processing unit indicated by the output result, and stores a correspondence between the data flow identifier of the packet and the output result into the offloading table, to perform offloading based on the offloading table after the network device receives a subsequent packet of a same data flow from another network device.

The processor 31 is configured to: perform an offloading process and control the packet to be sent to the processing unit before the data flow identifier of the packet is stored in the offloading table. For a detailed process in which the processor 31 performs offloading based on the offloading algorithm, refer to a description in the following embodiments.

For example, the network interface 33 in FIG. 3 may be a standard Ethernet interface, or may be an inter-board cell switching interface in a frame-shaped device, for example, HiGig.

A structure of one of the processing units SPU 1 to SPU n in FIG. 2 is shown in FIG. 4. The processing unit includes a processor 41, a memory 42, and a network interface 43. The processor 41, the memory 42 and the network interface 43 are interconnected by using a data bus 44. Optionally, the processor 41 may be one or more processors. The processor may be a single-core processor, or may be a multi-core processor, such as an X86 processor of the Intel Corporation.

The memory 42 includes a random access memory, a flash memory, a content addressable memory (content addressable memory, CAM), or any combination thereof. The memory 42 is configured to store a public network address pool (or a load balancing table) and an address mapping table. The public network address pool is used to store a public network IP address pre-configured for the processing unit for use and a port number configured on the public network address. The load balancing table is used to store, in an SLB scenario, a private network IP address and a port number of a server that provides a specified service in a private network.

The address mapping table is used to store a correspondence between a data flow identifier of a packet before address translation and a data flow identifier of the packet after address translation. Optionally, the memory 42 further stores a session table, and the session table is used to store a correspondence between the data flow identifier and a data flow status.

The processor 41 is configured to query, in the address mapping table based on a data flow identifier of a packet, a corresponding data flow identifier when receiving the packet sent by an offloading unit. If the corresponding data flow identifier is found, the processor 41 performs address translation on the packet by using the data flow identifier that is found, and sends an address-translated packet to another offloading unit. The processor 41 is further configured to: allocate, based on the public network address pool or the load balancing table, a data flow identifier to the packet when the corresponding data flow identifier is not found in the address mapping table, perform address translation on the packet based on the allocated data flow identifier, send an address-translated packet to another offloading unit, and create an entry in the address mapping table, where the entry is used to record the correspondence between the data flow identifier before address translation and the data flow identifier after address translation. Optionally, the processor 41 is further configured to update the session table, for example, create a session entry or update a session status, hit time, and the like that are stored in the session entry.

When the processor 41 does not find the corresponding data flow identifier in the address mapping table, for a detailed process in which the processor 41 allocates the data flow identifier to the packet based on the offloading algorithm, refer to a description in the following embodiments.

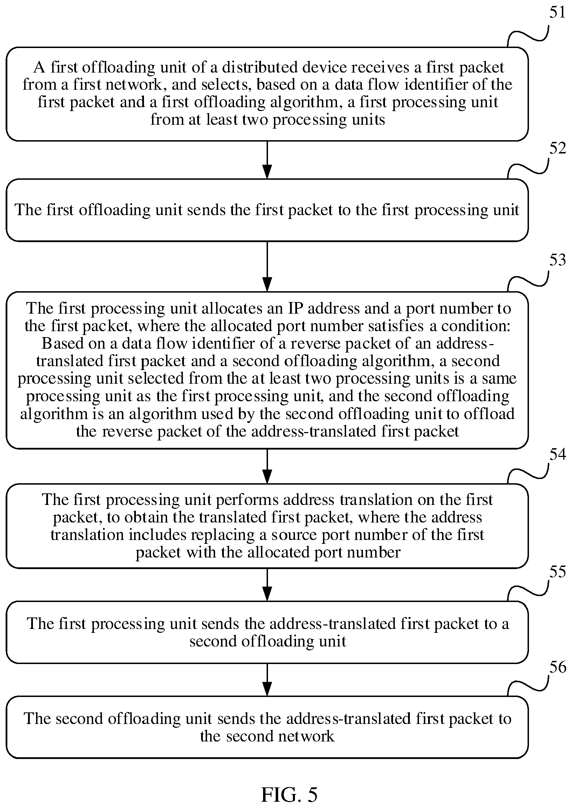

The packet processing method provided in the embodiments of this application is described briefly below with reference to FIG. 2, FIG. 3 and FIG. 4. FIG. 5 is a flowchart of a packet processing method according to an embodiment of this application.

Step 51: A first offloading unit of a distributed device receives a first packet from a first network, and selects, based on a data flow identifier of the first packet and a first offloading algorithm, a first processing unit from at least two processing units of the distributed device. An output result of the first offloading algorithm is used to indicate one processing unit in the at least two processing units. In this embodiment of this application, the processing unit indicated by the output result of the first offloading algorithm is referred to as a target processing unit. In this embodiment, it is assumed that the target processing unit indicated by the output result of the first offloading algorithm is the first processing unit. The first network may be a private network or a public network. If the first network is a private network exemplified by a local area network, a second network described below is a public network exemplified by the Internet. If the first network is a public network exemplified by the Internet, a second network described below is a private network exemplified by a local area network.

A structure of the distributed device in this embodiment is shown in FIG. 2, and the first offloading unit may be the LB 1 or the LB 2 in FIG. 2. If the first offloading unit is the LB 1 in FIG. 2, a second offloading unit described below is the LB 2 in FIG. 2. If the first offloading unit is the LB 2 in FIG. 2, a second offloading unit is the LB 1 in FIG. 2.

Optionally, the first offloading algorithm may be the existing offloading algorithm described above, or may be the improved offloading algorithm described above.

In this embodiment of this application, the "first packet" is named to distinguish the packet from another packet described below.

Step 52: The first offloading unit sends the first packet to the first processing unit.

Step 53: The first processing unit allocates an IP address and a port number to the first packet, where the allocated port number satisfies a condition: Based on a data flow identifier of a reverse packet of an address-translated first packet and a second offloading algorithm, a second processing unit selected from the at least two processing units is a same processing unit as the first processing unit, and the second offloading algorithm is an algorithm used by the second offloading unit to offload the reverse packet of the address-translated first packet. A source port number of the address-translated first packet is the allocated port number, and one of a source IP address and a destination IP address of the address-translated first packet is the allocated IP address.

In different scenarios, one of a source IP address and a destination IP address of the address-translated first packet is the allocated IP address. For example, in a NAT scenario, the source IP address of the address-translated first packet is the allocated IP address; or in an SLB scenario, the destination IP address of the address-translated first packet is the allocated IP address. The following provides detailed descriptions with reference to different examples.

In this embodiment, the first offloading algorithm used by the first offloading unit to offload the first packet may be different from the second offloading algorithm used by the second offloading unit to offload the reverse packet of the first packet. In an actual application scenario, considering deployment costs, a same network device may need to be applicable to a plurality of different scenarios. Therefore, for ease of configuration, the first offloading algorithm may be the same as the second offloading algorithm. In the following description, it is assumed that both the first offloading unit and the second offloading unit use the foregoing improved offloading algorithm. Herein, an offloading process of the first offloading unit and the second offloading unit is briefly described.

For ease of description, in this embodiment, the data flow identifier is expressed by a quintet <source IP address, destination IP address, source port, destination port, protocol type>.

In step 51, the offloading process of the first offloading unit includes:

inputting, by the first offloading unit in a first manner, elements in the quintet of the first packet into a pre-determined offloading algorithm. The first manner indicates an order in which the elements are input into the offloading algorithm.

Optionally, the first manner includes but is not limited to inputting the elements into HASH2 in the order of "source IP address, destination IP address, source port number, destination port number, and protocol type". In other words, the first manner is inputting the elements into HASH1 in an order of "source IP address, destination IP address, source port number, first port number, protocol type, and adjustable value", where X1 is the source IP address in the quintet, X2 is the destination IP address in the quintet, X3 is the source port in the quintet, X4 is the destination port in the quintet, X5 is the protocol type in the quintet, NewPort1 is the first port number, and NewPort2 is the adjustable value. Therefore, the first manner is expressed as "X1, X2, X3, NewPort1, X5, NewPort2", where X4 = NewPort1 + NewPort2.

A calculation process of the target processing unit may be expressed by the following formula:

$$\text{target processing unit identifier} = \text{HASH2}(\text{source IP address of the first packet, destination IP address of the first}$$

$$\text{packet, source port number of the first packet, destination port number of the first packet, protocol type of the first}$$

$$\text{packet}) \text{ MOD } (N) = (\text{HASH1}(\text{source IP address of the first packet, destination IP address of the first packet, source}$$

$$\text{port number of the first packet, first port number, protocol type of the first packet}) + \text{adjustable value}) \text{ MOD } (N)$$

Formula (1)

When calculating the output result of the offloading algorithm, the first offloading unit first determines a first port number and an adjustable value that satisfy a condition "X4 = NewPort1 + NewPort2", and then inputs the source IP address of the first packet, the destination IP address of the first packet, the source port number of the first packet, the first port number, the protocol type of the first packet and the adjustable value sequentially into the offloading algorithm, to obtain the output result.

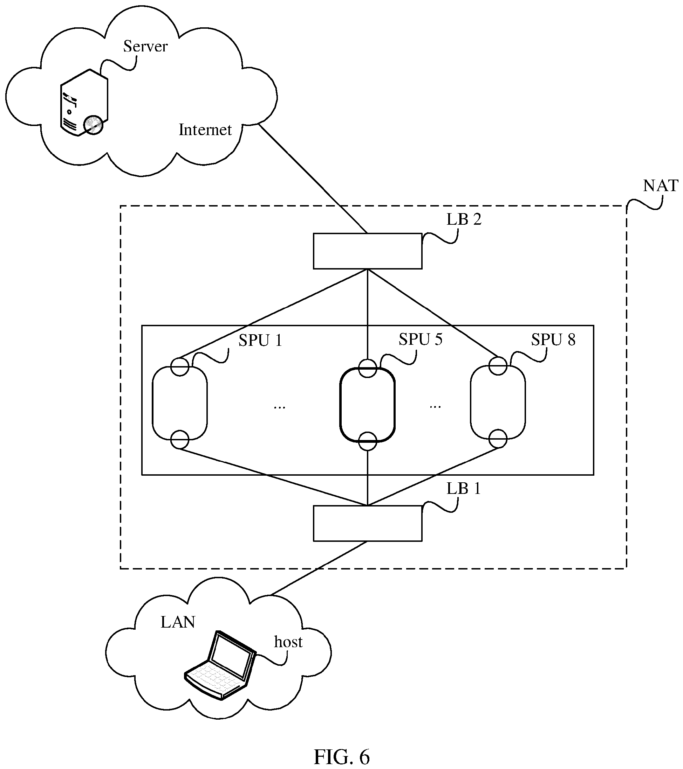

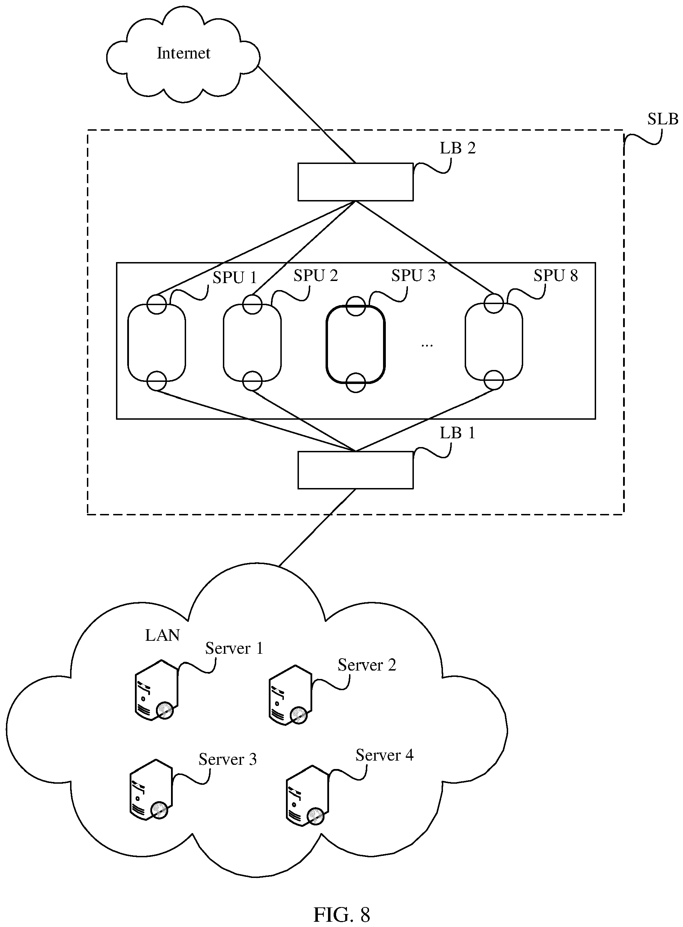

The first offloading unit may determine the first port number and the adjustable value by using a plurality of methods, provided that the condition "X4 = NewPort1 + NewPort2" is satisfied. The method for calculating the first port number and the adjustable value is described in detail below with reference to specific scenarios in FIG. 6 and FIG. 8.

Similar to step 51, a process in which the first processing unit allocates the port number in step 53 is described below.

A design objective is: Assuming that the first processing unit inputs the elements in the data flow identifier of the reverse packet of the address-translated first packet into the second offloading algorithm in the first manner, the obtained offloading result should be a value corresponding to the first offloading unit. Alternatively, the design objective is: Assuming that the first processing unit inputs the elements in the data flow identifier of the address-translated first packet into a pre-determined offloading algorithm in a second manner, the obtained offloading result should be a value corresponding to the first offloading unit. The second manner herein is a manner corresponding to the first manner.

The data flow identifier of the reverse packet corresponds to the data flow identifier of the address-translated first packet, that is, a source IP address of the reverse packet is a destination IP address of the address-translated first packet, a source port number of the reverse packet is a destination port number of the address-translated first packet, a destination IP address of the reverse packet is a source IP address of the address-translated first packet, and a destination port of the reverse packet is a source port of the address-translated first packet.

Due to the correspondence, in an actual processing process, the first processing unit may input the data flow identifier corresponding to the address-translated first packet into the second offloading algorithm based on an order indicated by the second manner. In the order indicated by the second manner, the location of the source IP address is the same as the location of the destination IP address in the order indicated by the first manner. In the order indicated by the second manner, the location of the destination IP address is the same as the location of the source IP address in the order indicated by the first manner. In the order indicated by the second manner, the location of the source port number is the same as the location of the destination port number in the order indicated by the first manner. In the order indicated by the second manner, the location of the destination port number is the same as the location of the source port number in the order indicated by the first manner.

For example, if the order indicated by the first manner is "source IP address, destination IP address, source port number, destination port number, and protocol type", the order indicated by the second manner is "destination IP address, source IP address, destination port number, source port number, and protocol type". The protocol type of the first packet is not changed by the address translation. Therefore, a protocol type of the address-translated first packet is the same as the protocol type of the first packet. A source port number of the address-translated first packet is the allocated port number. Therefore, the order indicated by the second manner may alternatively be expressed as "destination IP address of the address-translated first packet, source IP address of the address-translated first packet, destination port number of the address-translated first packet, second port number, protocol type of the first packet, and adjustable value", where a sum of the second port number and the adjustable value is the allocated port number. That is, the offloading result of the reverse packet of the first packet calculated by the first processing unit may alternatively be expressed as:

$$
\begin{aligned}
\text{target processing unit identifier} &= \text{HASH2}(\text{destination IP address of the address-translated first packet, source IP} \\
&\quad \text{address of the address-translated first packet, destination port number of the address-translated first packet, source} \\
&\quad \text{port number of the address-translated first packet, protocol type of the first packet}) \text{ MOD (N)} = (\text{HASH1}(\text{destination} \\
&\quad \text{IP address of the address-translated first packet, source IP address of the address-translated first packet, destination} \\
&\quad \text{port number of the address-translated first packet, second port number, protocol type of the first packet}) + \text{adjustable} \\
&\quad \text{value}) \text{ MOD (N)} \qquad \text{Formula (2)}.
\end{aligned}
$$

For the first processing unit, this step means that the offloading result is known, that is, the offloading result is the allocated port number calculated by the first processing unit. The foregoing formula (2) is transformed to obtain formula (3):

$$
\begin{aligned}
\text{adjustable value} &= \text{target processing unit identifier} - \text{HASH1}(\text{destination IP address of the address-translated first} \\
&\quad \text{packet, source IP address of the address-translated first packet, destination port number of the address-translated first} \\
&\quad \text{packet, second port number, protocol type of the first packet}) \text{ MOD (N)} \qquad \text{Formula (3)}.
\end{aligned}
$$

It may be understood that when the first processing unit allocates a port number as a source port number of the translated first packet, the port number is specially designed to ensure that reverse traffic can be offloaded to the processing unit. The special design is to calculate a to-be-allocated source port number that is unknown, and the to-be-allocated source port number is split into a setting part and a compensation part. The setting part is the second port number, and the compensation part is the adjustable value. The setting part is a port number that can be known in a pre-determined manner before being substituted into the foregoing formula. The first processing unit can calculate the adjustable value by inputting a known target processing unit identifier and a known second port number into a known offloading algorithm, then performs summation on the second port number and the adjustable value, and uses a result of the summation as an allocated source port number that satisfies a requirement.

Before obtaining the adjustable value based on formula (3), the first processing unit needs to first determine the second port number. The first processing unit determines the second port number in a manner of selecting a port number from a port number segment corresponding to the first processing unit as the second port number.

The first offloading unit may determine the second port number by using a plurality of methods, and the adjustable value can be obtained by substituting the second port number into formula (3) provided that the second port number is determined. The first offloading unit uses the sum of the second port number and the adjustable value as the allocated port number, and the allocated port number is used as the source port number of the address -translated first packet.

The method for calculating the second port number and the adjustable value is described in detail below with reference to specific scenarios in FIG. 6 and FIG. 8.

Step 54: The first processing unit performs address translation on the first packet, to obtain the translated first packet, where the address translation includes replacing the source port number of the first packet with the allocated port number.

Step 55: The first processing unit sends the address-translated first packet to the second offloading unit.

Step 56: The second offloading unit sends the address-translated first packet to the second network.

This embodiment of this application provides a packet processing method in a distributed device. The distributed device includes two offloading units and a plurality of processing units. After receiving a packet from an offloading unit, when the processing unit allocates an IP address and a port number to the packet as an address-translated source port, the allocated port number needs to satisfy the following condition: If the other offloading unit offloads a reverse packet of an address-translated packet by using an offloading algorithm, the reverse packet can still be offloaded to the processing unit. In a process of allocating the port, the to-be-allocated source port number is split into two parts, and a port number that satisfies a condition is extrapolated based on an improved offloading algorithm under a condition that an offloading result is known. By using the packet processing method provided in this application, the distributed device does not need to consume resources to synchronize and maintain all session table data among a plurality of processing units, so that a limitation to an application scenario of the distributed device caused by characteristics of data on which the distributed device operates in dependence is avoided. In addition, in the packet processing method provided in this embodiment of this application, two-way data flows of both sides of the session can be offloaded to the same processing unit of the distributed device. This avoids a problem that service processing fails when no address mapping relationship is stored in the processing unit, thereby improving operational reliability of the distributed device.

FIG. 6 is a schematic diagram of a scenario in which a NAT device processes an upstream packet and a corresponding downstream packet by using the packet processing method shown in FIG. 5 when a local area network user initiates access to a service provided by the Internet. As shown in FIG. 6, the distributed device is specifically a NAT device. The NAT device includes two offloading units: an LB 1 and an LB 2 respectively. The NAT device further includes eight processing units: an SPU 1 to an SPU 8 respectively. A correspondence between the SPU 1 to the SPU 8 and a value of an output result of a second offloading algorithm is shown in Table 1.

**Table 1**

| Name of a processing unit | Value of an output result of an offloading algorithm |
|---|---|
| SPU 1 | 0 |
| SPU 2 | 1 |
| SPU 3 | 2 |
| SPU 4 | 3 |
| SPU 5 | 4 |
| SPU 6 | 5 |
| SPU 7 | 6 |
| SPU 8 | 7 |

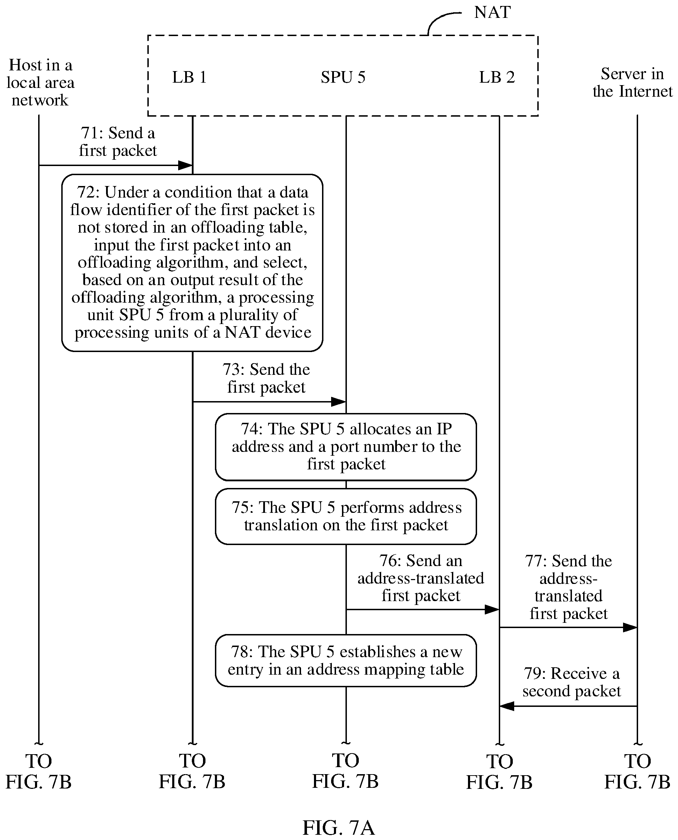

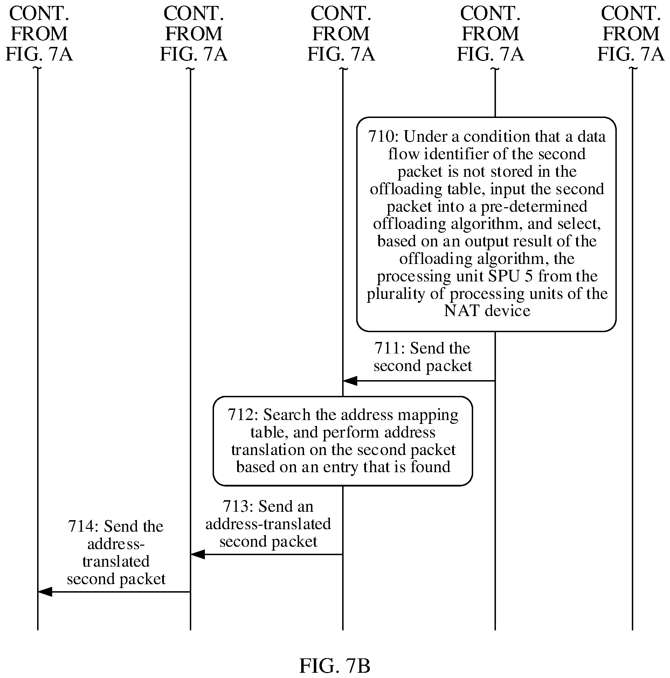

FIG. 7A and FIG. 7B are a flowchart of a NAT device processing a packet in the scenario shown in FIG. 6. A packet processing method shown in FIG. 7A and FIG. 7B includes the following steps.

Step 71: A host in a local area network sends a first packet, where the first packet is an upstream packet.

Specifically, the first packet is an access request packet triggered by a network access behavior. If a user accesses a website abc.com by using a browser running on the host in the local area network, the host generates an access request packet and sends the access request packet to the NAT device. A source address of the access request packet is a private network address 10.10.10.10 of the host in the local area network, and a source port number is 10000. A destination address of the access request packet is a public network address 30.30.30.30 of a Web server, and a destination port number is 30000. The Web server provides a web service of the website abc.com through the port 30000 of the public network address 30.30.30.30.

Optionally, the NAT device may distinguish between an upstream packet and a downstream packet based on a pre-configured correspondence between a port and a network. For example, a first port number segment of the NAT device is connected to the local area network, and a second port number segment of the NAT device is connected to the Internet. A port in the first port number segment of the NAT device receives the upstream packet, and a port in the second port number segment of the NAT device receives the downstream packet. In this embodiment, the port in the first port number segment of the NAT device receives the first packet, so that the first packet is determined as the upstream packet.

Step 72: An offloading unit LB 1 in the NAT device receives the first packet sent by the host. Under a condition that a data flow identifier of the first packet is not stored in an offloading table of the offloading unit LB 1, the offloading unit LB 1 inputs the first packet into an offloading algorithm, and selects, based on an output result of the offloading algorithm, a processing unit SPU 5 from eight processing units of the NAT device.

For ease of description, in this embodiment, an offloading algorithm used by the LB 1 is the same as an offloading algorithm used by the LB 2, and both are referred to as the "offloading algorithm". Actually, the offloading algorithm used by the LB 1 may be different from the offloading algorithm used by the LB 2 provided that both the processing unit and the LB 2 use a same offloading algorithm.

Refer to a hash algorithm HASH1 included in formula (1) and formula (2) described above. First, a hash algorithm used during offloading in this embodiment is briefly described. The hash algorithm may be designed in a plurality of manners, and may be divided into a symmetric algorithm and an asymmetric algorithm. In this embodiment of this application, the symmetric algorithm means that when elements in a quintet of a packet are input into the algorithm, if locations of a source IP address and a destination IP address in an input order are exchanged while locations of a source port number and a destination port number in the input order are exchanged, an output result of the algorithm after location exchange is the same as an output result of the algorithm before location exchange. Correspondingly, the asymmetric algorithm means that an output result of the algorithm after location exchange is different from an output result of the algorithm before location exchange.

Compared with the asymmetric algorithm, an advantage of the symmetric algorithm is that although the algorithm specifies an order in which elements in a quintet of a to-be-offloaded packet are input into the algorithm, whether the to-be-offloaded packet is the upstream packet or the downstream packet does not need to be distinguished in advance. For ease of understanding, specific examples of the symmetric algorithm and the asymmetric algorithm are provided herein with reference to examples.

It is assumed that for a to-be-offloaded packet, a source IP address is 10.10.10.10, a destination IP address is 30.30.30.30, a source port number is 10000, a destination port number is 30000, a protocol is a TCP, and a protocol number of the TCP in a related standard is 6.

Asymmetric algorithm example:

HASH(source IP address, destination IP address, source port number, destination port number, protocol number) = (source IP address - destination IP address) XOR (source port number - destination port number) XOR protocol number, where XOR represents hexadecimal byte-by-byte exclusive OR. In the algorithm, a hexadecimal byte-by-byte difference between the source IP address and the destination IP address and a hexadecimal byte-by-byte difference between the source port number and the destination port number are first calculated, and then byte-by-byte exclusive OR is performed on the two differences and the protocol number to obtain a single byte.

Before location exchange, a process of inputting the data flow identifier of the packet into the HASH algorithm in the order of "source IP address, destination IP address, source port number, destination port number, and protocol type" is expressed as:

$$\text{value corresponding to a target SPU} = \text{HASH}(10.10.10.10, 30.30.30.30, 10000, 30000, 6) \text{ MOD } (8) =$$

$$((10.10.10.10 - 30.30.30.30) \text{ XOR } (10000 - 30000) \text{ XOR } (6)) \text{ MOD } (8),$$

and
an exclusive OR operation included in the algorithm is expressed in hexadecimal, and the calculation process is expressed as:

$$\text{value corresponding to the target SPU} = (0xEC \wedge 0xEC \wedge 0xEC \wedge 0xEC \wedge 0xB1 \wedge 0xE0 \wedge 0x6) \text{ MOD } (8) = 0x57$$

$$\text{MOD } (8) = 7.$$

After location exchange, a process of inputting the data flow identifier of the packet into the offloading algorithm in the order of "destination IP address, source IP address, destination port number, source port number, and protocol type" is expressed as:

value corresponding to the target SPU = HASH(30.30.30.30, 10.10.10.10, 30000, 10000, 6) MOD (8) = ((30.30.30.30 − 10.10.10.10) XOR (30000 − 10000) XOR (6)) MOD (8),

and
an exclusive OR operation included in the algorithm is expressed in hexadecimal, and the calculation process is expressed as:

value corresponding to the target SPU = (0x14 ^ 0x14 ^ 0x14 ^ 0x14 ^ 0x4E ^ 0x20 ^ 0x6) MOD (8) = 0x68

MOD (8) =4.

It can be learned that the output result of the algorithm before location exchange is 7, and the output result of the algorithm after location exchange is 4. Therefore, the two output results are different.
Symmetric algorithm example:
HASH(source IP address, destination IP address, source port number, destination port number, protocol number) = source IP address XOR destination IP address XOR source port number XOR destination port number XOR protocol number. In the algorithm, byte-by-byte exclusive OR is performed on the five elements in the quintet to obtain a single byte.
Before location exchange, a process of inputting the data flow identifier of the packet into an offloading algorithm in the order of "source IP address, destination IP address, source port number, destination port number, and protocol type" is expressed as:

value corresponding to the target SPU = HASH(10.10.10.10, 30.30.30.30, 10000, 30000, 6) MOD (8) = ((10.10.10.10 XOR 30.30.30.30) XOR (10000 XOR 30000) XOR (6)) MOD (8),

and
an exclusive OR operation included in the algorithm is expressed in hexadecimal, and the calculation process is expressed as:

value corresponding to the target SPU = (0x1E ^ 0x1E ^ 0x1E ^ 0x1E ^ 0x14 ^ 0x14 ^ 0x14 ^ 0x14 ^ 0x75 ^

0x30 ^ 0x7 ^ 0xd8 ^ 0x6) MOD (8) = 0x9C MOD (8) = 1.

After location exchange, a process of inputting the data flow identifier of the packet into the offloading algorithm in the order of "destination IP address, source IP address, destination port number, source port number, and protocol type" is expressed as:

value corresponding to the target SPU = HASH(30.30.30.30, 10.10.10.10, 30000, 10000, 6) MOD (8) = ((30.30.30.30 XOR 10.10.10.10) XOR (30000 XOR 10000) XOR (6)) MOD (8),

and
an exclusive OR operation included in the algorithm is expressed in hexadecimal, and the calculation process is expressed as:

value corresponding to the target SPU = (0x14 ^ 0x14 ^ 0x14 ^ 0x14 ^ 0x1E ^ 0x1E ^ 0x1E ^ 0x1E ^ 0x7 ^ 0xd8

^ 0x75 ^ 0x30 ^ 0x6) MOD (8) = 0x9C MOD (8) = 1.

It can be learned that the output result of the algorithm before location exchange is 1, and the output result of the algorithm after location exchange is also 1. Therefore, the two output results are the same.

Obviously, the symmetric algorithm and the asymmetric algorithm are not limited to the algorithms listed above. Another symmetric algorithm may be expressed as:
value corresponding to the target SPU = HASH(source IP address, destination IP address, source port number, destination port number, protocol number) = (source IP address + destination IP address) XOR (source port number + destination port number) XOR protocol number. In the algorithm, a hexadecimal byte-by-byte sum of the source IP address and the destination IP address and a hexadecimal byte-by-byte sum of the source port number and the destination port number are first calculated, and then byte-by-byte exclusive OR is performed on the two sums and the protocol number to obtain a single byte. Other symmetric algorithms and asymmetric algorithms cannot be listed one by one herein.

In the following, an example in which the offloading algorithm used in this embodiment is the first symmetric algorithm listed above is used. Obviously, in this embodiment, the NAT device can distinguish between the upstream packet and the downstream packet. Therefore, the asymmetric algorithm may also be used in this embodiment.

For example, it is assumed that the data flow identifier is the quintet <source IP address, destination IP address, source port, destination port, protocol type>. The LB 1 in FIG. 2 receives the first packet sent by the host, and inputs a data flow identifier <10.10.10.10, 30.30.30.30, 10000, 30000, TCP> into the first offloading algorithm in the first manner when the data flow identifier is not stored in the offloading table of the LB 1. In this embodiment, for example, if the first manner is "source IP address, destination IP address, source port number, first port number, protocol type, and adjustable value",

$$\text{value corresponding to the target SPU} = \text{HASH2}(10.10.10.10, 30.30.30.30, 10000, 30000, \text{TCP})$$

$$= \text{HASH1}((10.10.10.10, 30.30.30.30, 10000, \text{NewPort1}, \text{TCP}) + \text{NewPort2})\ \text{MOD}\ (8).$$

Before calculating the target SPU, the LB 1 needs to first calculate NewPort1 and NewPort2. The LB 1 first determines NewPort1, and then determines NewPort2 based on a formula: NewPort2 = destination port number - NewPort1. The LB 1 may determine NewPort1 by using a plurality of methods, and the following provides descriptions merely by using examples.

Method 1: Continuous port numbers starting from a reserved port number are grouped into at least one port number group, where the last three digits of the first port number in the at least one port number group are 0 when the first port number is expressed in hexadecimal. The LB 1 determines a port number at a predetermined location before the destination port number in a port number group in which the destination port number of the first packet is located as the first port number.

For example, if reserved port numbers are 1 to 999, grouping starts from a port number 1000. Among port number groups obtained in the foregoing grouping manner, a port number group in which a destination port number 30000 is located is [30000, 30007]. Assuming that the port number at the predetermined location is the first port number in each group, and NewPort1 = 30000, NewPort2 = 30000 - 30000 = 0.

Method 2: Continuous port numbers starting from a reserved port number to the destination port number of the first packet are grouped into at least one port number group in a manner that a predetermined quantity of port numbers are grouped into one group. The LB 1 determines a port number at a predetermined location before the destination port number in a port number group in which the destination port number of the first packet is located as the first port number.

For example, if the reserved port numbers are 1 to 999, continuous port numbers starting from 1000 are divided into groups, and every eight continuous port numbers are grouped into one group. In this way, a port number group in which the port number 30000 is located is [30000, 30007]. If the first port number in [30000, 30007] is determined as NewPort1, that is, NewPort1 = 30000, NewPort2 = 30000 - 30000 = 0.

Continuing with the foregoing example, assuming that the LB 1 obtains that NewPort1 is 30000, and NewPort2 is 0, NewPort1 and NewPort2 are substituted into the foregoing formula, to obtain:

$$\text{value corresponding to the target SPU} = \text{HASH1}((10.10.10.10, 30.30.30.30, 10000, \text{NewPort1}, \text{TCP}) + \text{NewPort2})\ \text{MOD}\ (8)$$

$$= \text{HASH1}((10.10.10.10, 30.30.30.30, 10000, 30000, 6) + 0)\ \text{MOD}\ (8)$$

$$= (10.10.10.10\ \text{XOR}\ 30.30.30.30\ \text{XOR}\ 10000\ \text{XOR}\ 30000\ \text{XOR}\ 6)\ \text{MOD}\ (8),$$

and an exclusive OR operation included in the algorithm is expressed in hexadecimal, and the calculation process is expressed as:

value corresponding to the target SPU

$$= (0xA \wedge 0xA \wedge 0xA \wedge 0xA \wedge 0x1E \wedge 0x1E \wedge 0x1E \wedge 0x1E \wedge 0x27 \wedge 0x10 \wedge 0x75 \wedge 0x30 \wedge 0x6) \text{ MOD (8)}$$

$$= 0x74 \text{ MOD (8)} = 4, \text{ that is, the target SPU is the SPU 5.}$$

Step 73: The offloading unit LB 1 in the NAT device sends the first packet to a processing unit SPU 5.

Step 74: The processing unit SPU 5 allocates an IP address and a port number to the first packet. The allocated new IP address is used as an address-translated source IP address, and the allocated port number is used as an address-translated source port number. The allocated port number satisfies a condition: If the SPU 5 inputs the data flow identifier of the address-translated first packet into the pre-determined offloading algorithm in a second manner corresponding to the first manner, a processing unit selected from the at least two processing units is still the SPU 5 based on the output result of the offloading algorithm.

It is assumed that in this embodiment, all public network addresses configured by the processing units are 20.20.20.20, that is, the processing units share a same public network address while respectively configuring different port number ranges on 20.20.20.20. In this way, limited public network address resources can be reduced.

For example, the port number range configured on the SPU 5 is 2000 to 9999, that is, a total of 8000 port numbers. After the SPU 5 performs address translation on the first packet, the data flow identifier of the first packet is <20.20.20.20, 30.30.30.30, new source port number, 30000, TCP>.

The SPU 5 inputs the data flow identifier of the translated first packet into the offloading algorithm in the second manner. In this embodiment, for example, if the second manner is "destination IP address, source IP address, destination port number, second port number, protocol type, and adjustable value",

value corresponding to the target SPU = HASH2(30.30.30.30, 20.20.20.20, 30000, new source port number, TCP)

= HASH1((30.30.30.30, 20.20.20.20, 30000, NewPort1, TCP) + NewPort2) MOD (8) =4.

Because an output result of the offloading algorithm corresponding to the target SPU is known as 4, a process of calculating the new source port number is actually transformed into a process of calculating NewPort1 and NewPort2. The SPU 5 first determines NewPort1, then calculates NewPort2 based on the determined NewPort1, and finally determines the new source port number based on a formula: new source port number = NewPort1 + NewPort2. The SPU 5 may determine NewPort1 by using a plurality of methods, and the following provides descriptions merely by using examples.

The SPU 5 selects a port number from a port number segment corresponding to the SPU 5 as NewPort1. Optionally, in a selection manner, the SPU 5 divides a port number segment 2000 to 9999 into at least one port number group in a manner that a predetermined quantity of port numbers are grouped into one group; and selects a port number group randomly from the at least one port number group, and determines a port number at a predetermined location in the selected port number group as the second port number.

For example, the SPU 5 divides the port number segment 2000 to 9999 into 1000 groups in a manner that eight port numbers are grouped into one group, and selects a group randomly from the 1000 groups, for example, selects the second port group, where port numbers included in the second port group are 2008 to 2015, and the first port number 2008 in the selected second port group is used as NewPort1.

Optionally, in another selection manner, the SPU 5 may alternatively express a port number in the port number segment 2000 to 9999 as a hexadecimal number, and use a port number of which the last three digits are 0 when the port number is expressed in hexadecimal as the first port number of each group, to divide the port number segment 2000 to 9999 into groups. The SPU 5 selects a port number group randomly from the at least one port number group, and determines a port number at a predetermined location in the selected port number group as the second port number.

After determining NewPort1, the SPU 5 further calculates NewPort2:

NewPort2 = 4 − HASH1(30.30.30.30, 20.20.20.20, 30000, NewPort1, TCP) MOD (8) = 4 − HASH1(30.30.30.30, 20.20.20.20, 30000, 2008, TCP)) MOD (8),

and
an exclusive OR operation included in the algorithm is expressed in hexadecimal, and the calculation process is expressed

as:

$$NewPort2 =$$

$$4 - (0x1E \wedge 0x1E \wedge 0x1E \wedge 0x1E \wedge 0x14 \wedge 0x14 \wedge 0x14 \wedge 0x14 \wedge 0x75 \wedge 0x30 \wedge 0x7 \wedge 0xD8 \wedge 0x6) \text{ MOD } (8) =$$

$$4 - 0x9C \text{ MOD } (8) = 4 - 4 = 0;$$

and
the SPU 5 further determines the new source port number based on the calculated NewPort1 and NewPort2: new source port number = NewPort1 + NewPort2 = 2008.

To avoid simultaneously allocating a same port number to packets from different hosts in the local area network, the first processing unit may further set a use status identifier for each port number in a corresponding port number segment. The use status identifier is used to record whether the port number has been used. For example, a value 1 of the identifier indicates that the port number has been used, or a value 0 of the identifier indicates that the port number has not been used. When the use status identifier indicates that the port number allocated by the first processing unit to the first packet has been used, the second port number is re-determined by using the foregoing method, and then the adjustable value is re-calculated. A port number is re-allocated by performing summation on the re-determined second port number and the adjustable value. After the first processing unit allocates a port number to the first packet, a use status identifier corresponding to the port number is set to a value corresponding to a used status. When determining, based on a session status recorded in a session table, that a session established by using the allocated port number ends, the first processing unit resets a use status identifier of the allocated port number to a value corresponding to an unused status, so that the port number can be reused. For example, after the first processing unit allocates a port number 2008 to the first packet, a status of the port number 2008 is set to 1. After determining, based on the session status in the session table, that a session to which the first packet belongs ends, the first processing unit sets the status of the port number 2008 to 0.

Step 75: The SPU 5 performs address translation on the first packet. The address translation includes: replacing the source IP address 10.10.10.10 of the first packet with a new IP address 20.20.20.20, and replacing the source port number 10000 with the allocated port number 2008, to obtain a translated first packet. A data flow identifier of the address-translated first packet is <20.20.20.20, 30.30.30.30, 2008, 30000, TCP>.

Step 76: The SPU 5 sends an address-translated first packet to an offloading unit LB 2.

Step 77: The LB 2 sends the address-translated first packet to a server in the Internet.

Optionally, after step 74, step 78 is further included, that is, the SPU 5 establishes a new entry in an address mapping table. The entry includes a data flow identifier <10.10.10.10, 30.30.30.30, 10000, 30000, TCP> of the first packet before address translation and a data flow identifier <20.20.20.20, 30.30.30.30, 2008, 30000, TCP> of the address-translated first packet.

Through step 71 to step 77, the NAT device can ensure that the LB 2 can offload, after receiving a second packet from the Web server, the second packet to the SPU 5 for processing. In this embodiment, the second packet is a response packet corresponding to the access request packet, and is also the reverse packet of the first packet.

Optionally, the processing method in FIG. 7A and FIG. 7B further includes step 79 to step 714.

Step 79: The LB 2 in the NAT device receives a second packet, where the second packet is a response packet of the first packet sent by a Web server.

Specifically, after receiving the first packet, the Web server obtains, from a request line "GET /index.html HTTP/1.1" of the first packet, a URL path /index.html of a resource requested by the host. If the resource whose path is /index.html exists, a status line HTTP/1.1 200 OK, other information used to describe the server and a policy used to continue to access the resource in the future are carried by the server in the second packet.

Step 710: Under a condition that a data flow identifier of the second packet is not stored in an offloading table of the offloading unit LB 2, the LB 2 in the NAT device inputs the second packet into an offloading algorithm, and selects, based on an output result of the offloading algorithm, the processing unit SPU 5 from a plurality of processing units of the NAT device.

The data flow identifier of the second packet is <30.30.30.30, 20.20.20.20, 30000, 2008, TCP>. The LB 2 inputs the data flow identifier into the offloading algorithm in the first manner:

$$\text{value corresponding to the target SPU} = HASH2(30.30.30.30, 20.20.20.20, 30000, 2008, TCP)$$

$$= HASH1((30.30.30.30, 20.20.20.20, 30000, 2008, 6) + 0) \text{ MOD } (8),$$

and

an exclusive OR operation included in the algorithm is expressed in hexadecimal, and the calculation process is expressed as:

value corresponding to the target SPU =

$$((0x1E \wedge 0x1E \wedge 0x1E \wedge 0x1E \wedge 0x14 \wedge 0x14 \wedge 0x14 \wedge 0x14 \wedge 0x75 \wedge 0x30 \wedge 0x7 \wedge 0xD8 \wedge 0x6) + 2) \text{ MOD } (8)$$

$$= 4.$$

A processing unit corresponding to the output result 4 is the SPU 5.

Step 711: The offloading unit LB 2 in the NAT device sends the second packet to the processing unit SPU 5.

Step 712: The processing unit SPU 5 searches the address mapping table, and performs address translation on the second packet based on an entry that is found.

In this case, the address mapping table of the processing unit SPU 5 may have an entry that includes the data flow identifier <30.30.30.30, 20.20.20.20, 30000, 2008, TCP> of the second packet. Therefore, the processing unit SPU 5 may perform, based on a corresponding data flow identifier in a session entry, address translation on the second packet, and translate a destination address of the second packet into 10.10.10.10 and a destination port of the second packet into 10000, to obtain the address-translated second packet.

Optionally, the processing unit SPU 5 may further modify the session status recorded in the corresponding session entry based on other information carried in the second packet, for example, content of the status line.

Step 713: The processing unit SPU 5 sends an address-translated second packet to the offloading unit LB 1.

Step 714: The offloading unit LB 1 sends the address-translated second packet to the host in the local area network, where the host is the host that previously sends the first packet.

Through the foregoing solution, the first packet sent by the host of the local area network to an Internet server can be offloaded by the offloading unit to the LB 5, and after the processing unit SPU 5 performs NAT translation, the second packet that is sent by the Internet server and that is used as the response packet of the address-translated first packet can still be processed by the processing unit SPU 5. Because the processing unit SPU 5 establishes the address mapping entry and the session entry after performing NAT translation, the processing unit SPU 5 can process the second packet based on the address mapping entry and the session entry after receiving the second packet, so that a processing failure is avoided. In addition, in the solution, the processing units may perform address translation by using a same public network IP address, so that waste of the address resources is avoided, and limited address resources are reduced.

FIG. 8 is a schematic diagram of a scenario in which an SLB device processes a downstream packet and a corresponding upstream packet by using the packet processing method shown in FIG. 5 when an Internet user accesses a service provided by a server in a local area network. As shown in FIG. 8, the distributed device is specifically an SLB device. The SLB device includes two offloading units: an LB 1 and an LB 2 respectively. The SLB device further includes eight processing units: an SPU 1 to an SPU 8 respectively. For values of 0 to 7 respectively corresponding to the SPU 1 to the SPU 8, still refer to Table 1.

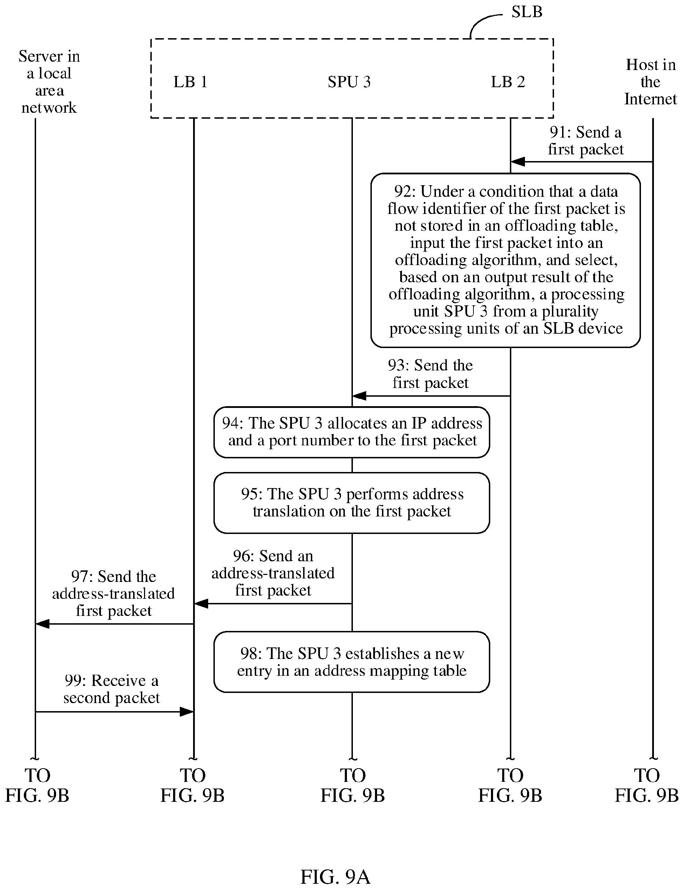

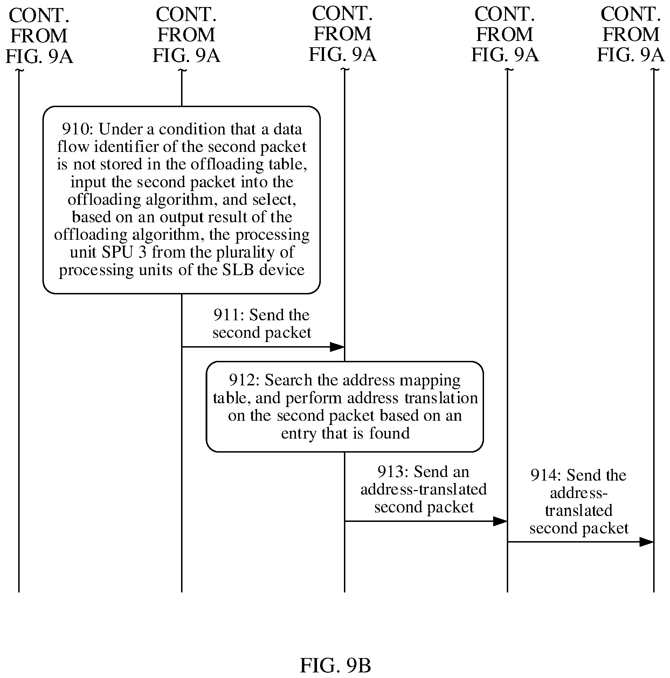

FIG. 9A and FIG. 9B are a flowchart of an SLB device processing a packet in the scenario shown in FIG. 8. A packet processing method shown in FIG. 9A and FIG. 9B includes the following steps.

Step 91: A host in the Internet sends a first packet, where the first packet is a downstream packet.

A server cluster in a local area network provides a web service of a website cd.com. The host in the Internet is parsed by a domain name system (English: Domain Name System, DNS) to obtain that a virtual IP address providing the web service of the website cd.com is 22.22.22.22, and the port number is 2222. The first packet sent by the host in the Internet is an access request packet. For the access request packet, a destination address is the virtual IP address 22.22.22.22, a destination port number is 2222, a source IP address is an IP address 33.33.33.33 of the host in the Internet, and a source port number is 3333.

Step 92: An offloading unit LB 2 in an SLB device receives the first packet. Under a condition that a data flow identifier of the first packet is not stored in an offloading table, the offloading unit LB 2 inputs the first packet into a pre-determined offloading algorithm, and selects, based on an output result of the offloading algorithm, a processing unit SPU 3 from eight processing units of the SLB device.

In this embodiment, the offloading algorithm used by the offloading unit LB 2 is the same as the offloading algorithm used by the LB 1 and the processing units. Therefore, the offloading algorithm used by the offloading unit LB 2 is referred to as the offloading algorithm without distinction.

For a description of the hash algorithm included in the offloading algorithm, refer to the description of step 72 of FIG. 7A and FIG. 7B in the foregoing embodiment. In this embodiment, the offloading process is described still by using the symmetric algorithm in the foregoing embodiment as an example. Obviously, in this embodiment, the upstream packet and the downstream packet are distinguished. Therefore, the asymmetric algorithm may alternatively be used in this embodiment. In this embodiment, the SLB device can also distinguish between the upstream packet and the downstream packet by pre-configuring information at a port. Therefore, the asymmetric algorithm may alternatively be used in this embodiment.

Specifically, the LB 2 inputs the data flow identifier into the offloading algorithm in a first manner, where the first manner in this embodiment is the same as the first manner in the embodiment shown in FIG. 7A and FIG. 7B:

$$\text{value corresponding to the target SPU} = \text{HASH2}(33.33.33.33,\ 22.22.22.22,\ 3333,\ 2222,\ \text{TCP}) =$$

$$\text{HASH1}((33.33.33.33,\ 22.22.22.22,\ 3333,\ \text{NewPort1},\ \text{TCP}) + \text{NewPort2})\ \text{MOD}\ (8).$$

The LB 2 determines that NewPort1 is 3328 and NewPort2 is 5 by using a method similar to step 72 of FIG. 7A and FIG. 7B, and the specific process is not repeated herein. The LB 2 substitutes NewPort1 and NewPort2 into the foregoing formula, to obtain:

$$\text{value corresponding to the target SPU} = \text{HASH1}(33.33.33.33,\ 22.22.22.22,\ \text{NewPort1}(3333),\ 2222,\ \text{TCP}) +$$

$$\text{NewPort2})\ \text{MOD}\ (8)$$

$$= \text{HASH1}(33.33.33.33,\ 22.22.22.22,\ 3328,\ 2222,\ 6) + 5)\ \text{MOD}\ (8),$$

and
an exclusive OR operation included in the algorithm is expressed in hexadecimal, and the calculation process is expressed as:

$$\text{value corresponding to the target SPU}$$

$$= ((0x21\ \wedge\ 0x21\ \wedge\ 0x21\ \wedge\ 0x21\ \wedge\ 0x16\ \wedge\ 0x16\ \wedge\ 0x16\ \wedge\ 0x16\ \wedge\ 0xD\ \wedge\ 0x00\ \wedge\ 0x8\ \wedge\ 0xAE\ \wedge\ 0x6) + 5)\ \text{MOD}\ (8)$$

$$= (0xAD + 5)\ \text{MOD}\ (8) = 2.$$

In this embodiment, the output result of the offloading algorithm calculated by the LB 2 is 2, and the processing unit indicated by the LB 2 is the SPU 3.

Step 93: An offloading unit LB 3 in the SLB device sends the first packet to a processing unit SPU 3.

Step 94: The processing unit SPU 3 allocates an IP address and a port number to the first packet. The allocated new IP address is used as an address-translated destination IP address, and the allocated port number is used as an address-translated source port number. The allocated port number satisfies a condition: If the SPU 3 inputs the data flow identifier of the address-translated first packet into the pre-determined offloading algorithm in a second manner corresponding to the first manner, a processing unit selected from the at least two processing units is still the SPU 3 based on the output result of the offloading algorithm.

In this embodiment, the SPU 3 selects, based on a pre-determined load balancing algorithm, a real address and a port number of a server that actually processes an access request. For example, in the local area network, four servers share the web service of the website cd.com. Addresses and port numbers of the four servers are shown in Table 2.

**Table 2**

| Server name | Server address | Port number |
|---|---|---|
| Server 1 | 11.11.11.11 | 1111 |
| Server 2 | 11.11.11.12 | 1111 |
| Server 3 | 11.11.11.13 | 1111 |
| Server 4 | 11.11.11.14 | 1111 |

Optionally, based on the load balancing algorithm, a server may be selected randomly from the four servers, or a server having the lowest current resource occupation rate may be selected based on current resource occupation rates of the four servers, to provide a service. This is not listed herein again.

Assuming that the server selected by the SPU 3 is the server 1 in this embodiment, a destination IP address of the address-translated first packet is 11.11.11.11 and a destination port number of the address-translated first packet is 1111. After the SPU 3 performs address translation on the first packet, the data flow identifier of the first packet is <33.33.33.33, 11.11.11.11, new source port number, 1111, TCP>.

The SPU 3 inputs the data flow identifier of the translated first packet into the offloading algorithm in the second manner. In this embodiment, for example, if the second manner is "destination IP address, source IP address, destination port number, second port number, protocol type, and adjustable value",

value corresponding to the target SPU = HASH2(11.11.11.11, 33.33.33.33, 1111, new source port number, TCP) = HASH1((11.11.11.11, 33.33.33.33, 1111, NewPort1, TCP) + NewPort2) MOD (8) = 1.

Because an output result of the offloading algorithm corresponding to the target SPU is known as 2, a process of calculating the new source port number is actually transformed into a process of calculating NewPort1 and NewPort2. The SPU 3 first determines NewPort1, then calculates NewPort2 based on the determined NewPort1, and finally determines the new source port number based on a formula: new source port number = NewPort1 + NewPort2. The SPU 3 may determine NewPort1 by using a plurality of methods, which are similar to the method for determining NewPort1 in step 72 of FIG. 7A and FIG. 7B. For the method, refer to the description in FIG. 7A and FIG. 7B. In this embodiment, the SPU 3 determines that NewPort1 is 3328.

After determining NewPort1, the SPU 3 further calculates NewPort2 by using a similar method for calculating NewPort2 in step 74 of FIG. 7A and FIG. 7B:

$$NewPort2 = 2 - HASH1(11.11.11.11, 33.33.33.33, 1111, NewPort1, TCP) \, MOD \, (8)$$

$$= 2 - HASH1(11.11.11.11, 33.33.33.33, 1111, 3328, TCP) \, MOD \, (8),$$

and

an exclusive OR operation included in the algorithm is expressed in hexadecimal, and the calculation process is expressed as:

$$NewPort2 =$$

$$2 - (0xB \wedge 0xB \wedge 0xB \wedge 0xB \wedge 0x21 \wedge 0x21 \wedge 0x21 \wedge 0x21 \wedge 0x4 \wedge 0x57 \wedge 0xD \wedge 0x0 \wedge 0x6) \, MOD \, (8)$$

$$= 2 - 0x58 \, MOD \, (0x8) = 2 - 0 = 2;$$

and

the SPU 3 further determines the new source port number based on the calculated NewPort1 and NewPort2: new source port number = NewPort1 + NewPort2 = 3328 + 2 = 3330.

Step 95: The SPU 3 performs address translation on the first packet. The address translation includes: replacing the destination IP address 22.22.22.22 of the first packet with a new IP address 11.11.11.11, replacing the destination port of the first packet with the port number 1111, and replacing the source port number 3333 with the allocated source port number 3330, to obtain a translated first packet. A data flow identifier of the translated first packet is <33.33.33.33, 11.11.11.11, 3330, 1111, TCP>.

Step 96: The SPU 3 sends an address-translated first packet to an offloading unit LB 1.

Step 97: The offloading unit LB 1 sends the address-translated first packet to a server in a local area network.

Optionally, after step 94, step 98 is further included, that is, the SPU 3 establishes a new entry in an address mapping table. The entry includes a data flow identifier <33.33.33.33, 22.22.22.22, 3333, 2222, TCP> of the first packet before address translation and a data flow identifier <33.33.33.33, 11.11.11.11, 3330, 1111, TCP> of the address-translated first packet.

Through step 91 to step 97, the SLB device can ensure that the LB 1 can offload, after receiving a second packet from a server 1 in the local area network, the second packet to the SPU 3 for processing. In this embodiment, the second packet is a response packet corresponding to the access request packet, and is also the reverse packet of the first packet.

Optionally, the processing method in FIG. 9A and FIG. 9B further includes step 99 to step 914.

Step 99: The LB 1 in the SLB device receives a second packet, where the second packet is a response packet of the first packet sent by a server 1.

Specifically, after receiving the first packet, the server 1 obtains, from a request line "GET /index.html HTTP/1.1" of the first packet, a URL path /index.html of a resource requested by the host. If the resource whose path is /index.html exists, a status line HTTP/1.1 200 OK, other information used to describe the server and a policy used to continue to access the resource in the future are carried by the server in the second packet.

Step 910: Under a condition that a data flow identifier of the second packet is not stored in an offloading table of the offloading unit LB 1, the LB 1 in the SLB device inputs the second packet into an offloading algorithm, and selects, based on an output result of the offloading algorithm, the processing unit SPU 3 from a plurality of processing units of the SLB device.

The data flow identifier of the second packet is <11.11.11.11, 33.33.33.33, 1111, 3330, TCP>. All of the offloading units in the SLB device input the data flow identifier into the offloading algorithm in the first manner:

$$\text{value corresponding to the target SPU} = \text{HASH2}(11.11.11.11, 33.33.33.33, 1111, 3330, \text{TCP})$$

$$= \text{HASH1}((11.11.11.11, 33.33.33.33, 1111, 3328, \text{TCP}) + 2) \text{ MOD } (8).$$

and
an exclusive OR operation included in the algorithm is expressed in hexadecimal, and the calculation process is expressed as:

$$\text{value corresponding to the target SPU}$$

$$= ((0xB \wedge 0xB \wedge 0xB \wedge 0xB \wedge 0x21 \wedge 0x21 \wedge 0x21 \wedge 0x21 \wedge 0x4 \wedge 0x57 \wedge 0xD \wedge 0x0 \wedge 0x6) + 2) \text{ MOD } (8)$$

$$= (0+2) \text{ MOD } (8) = 2.$$

A processing unit corresponding to the output result 2 is the SPU 3.

Step 911: The offloading unit LB 1 in the SLB device sends the second packet to the processing unit SPU 3.

Step 912: The processing unit SPU 3 searches the address mapping table, and performs address translation on the second packet based on an entry that is found.

In this case, the processing unit SPU 3 may have an entry that includes the data flow identifier <11.11.11.11, 33.33.33.33, 1111, 3330, TCP> of the second packet. Therefore, the processing unit SPU 3 may perform, based on a corresponding data flow identifier in the entry, address translation on the second packet, and translate a destination address of the second packet into 33.33.33.33 and a destination port of the second packet into 3333, to obtain the address-translated second packet.

Optionally, the processing unit SPU 3 may further modify the session status recorded in the corresponding session entry based on other information carried in the second packet, for example, content of the status line.

Step 913: The processing unit SPU 3 sends an address-translated second packet to the offloading unit LB 2.

Step 914: The offloading unit LB 2 sends the address-translated second packet to the host in the Internet, where the host is the host that previously sends the first packet.

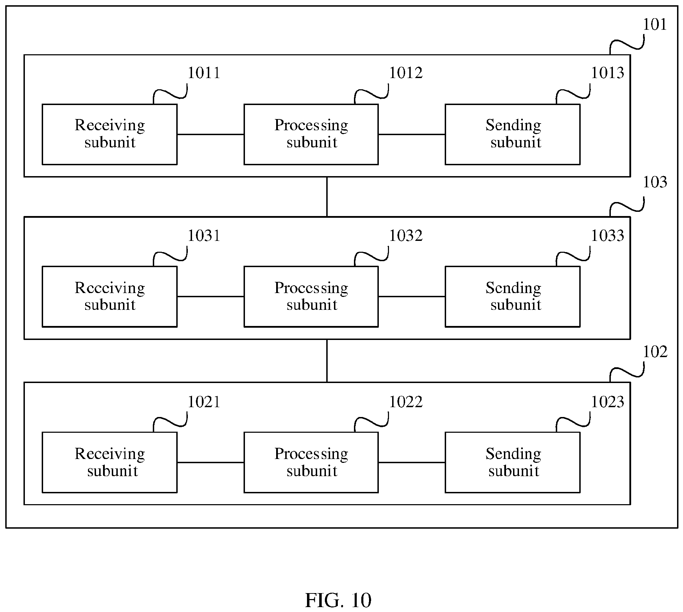

An embodiment of the present invention further provides a distributed device. FIG. 10 is a schematic structural diagram of the distributed device. The distributed device includes a first offloading unit 101, a second offloading unit 102, and at least two processing units that include a first processing unit 103.

The first offloading unit 101 includes a receiving subunit 1011, a processing subunit 1012, and a sending subunit 1013.

The second offloading unit 102 includes a receiving subunit 1021, a processing subunit 1022, and a sending subunit 1023.

The first processing unit 103 includes a receiving subunit 1031, a processing subunit 1032, and a sending subunit 1033.

The receiving subunit 1011 in the first offloading unit 101 is configured to receive a first packet from a first network.

The processing subunit 1012 in the first offloading unit 101 is configured to select, based on a data flow identifier of the first packet and a first offloading algorithm, a first processing unit from the at least two processing units, where the data flow identifier of the first packet includes at least a source Internet Protocol IP address, a destination IP address, a source port number, and a destination port number of the first packet.

The sending subunit 1013 in the first offloading unit 101 is configured to send the first packet to the first processing unit 103.

The receiving subunit 1031 in the first processing unit 103 is configured to receive the first packet sent by the first offloading unit 101.

The processing subunit 1032 in the first processing unit 103 is configured to: allocate an IP address and a port number to the first packet, where the allocated port number satisfies a condition: Based on a data flow identifier of a reverse packet of an address-translated first packet and a second offloading algorithm, a second processing unit selected from the at least two processing units is a same processing unit as the first processing unit, a source port number of the address-translated first packet is the allocated port number, one of a source IP address and a destination IP address of the address-translated first packet is the allocated IP address, and the second offloading algorithm is an algorithm used by the second offloading unit to offload the reverse packet of the address-translated first packet; and perform address translation on the first packet, to obtain the address-translated first packet, where the address translation includes replacing the source port number of the first packet with the allocated port number.

The sending subunit 1032 in the first processing unit 103 is configured to send the address-translated first packet to the second offloading unit.

The receiving subunit 1021 in the second offloading unit 102 is configured to receive the address-translated first packet sent by the first processing unit 103.

The processing subunit 1022 in the second offloading unit 102 is configured to instruct the sending subunit 1023 in the second offloading unit 102 to send the address-translated first packet to a second network.

For specific working procedures of the first offloading unit 101, the second offloading unit 102, the first processing unit 103, and the subunits, refer to the description in the foregoing embodiments, and details are not described herein again. All or some of the units may be implemented by using software, hardware, firmware, or any combination thereof. When software is used for implementation, implementation may be entirely or partially performed in a form of a computer program product. The computer program product includes one or more computer instructions. When the computer program instructions are loaded and executed on the computer, all or some of the procedures or functions according to the embodiments of the present invention are generated. The computer may be a general-purpose computer, a dedicated computer, a computer network, or another programmable apparatus.

The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid State Disk (SSD)), or the like.

Obviously, a person skilled in the art can make various modifications and variations to the present invention without departing from the scope of the present invention. This application is intended to cover these modifications and variations provided that they fall within the scope of protection defined by the following claims.

**Claims**

1. A packet processing method in a distributed device, wherein the distributed device is deployed between a first network and a second network, the distributed device comprises a first offloading unit, a second offloading unit, and at least two processing units, each processing unit in the at least two processing units is coupled to the first offloading unit and the second offloading unit, and the method comprises:

   receiving (51), by the first offloading unit, a first packet from the first network, and selecting (51), based on a data flow identifier of the first packet and a first offloading algorithm, a first processing unit from the at least two processing units, wherein the data flow identifier of the first packet comprises at least a source Internet Protocol IP address, a destination IP address, a source port number, and a destination port number of the first packet;
   sending (52), by the first offloading unit, the first packet to the first processing unit;
   allocating (53), by the first processing unit, an IP address and a port number to the first packet, wherein the allocated port number satisfies a condition: Based on a data flow identifier of a reverse packet of an address-translated first packet and a second offloading algorithm, a second processing unit selected from the at least two processing units is a same processing unit as the first processing unit, a source port number of the address-translated first packet is the allocated port number, one of a source IP address and a destination IP address of the address-translated first packet is the allocated IP address, and the second offloading algorithm is an algorithm used by the second offloading unit to offload the reverse packet of the address-translated first packet;
   performing (54), by the first processing unit, address translation on the first packet, to obtain the address-translated first packet, wherein the address translation comprises replacing the source port number of the first packet with the allocated port number;

sending (55), by the first processing unit, the address-translated first packet to the second offloading unit; and

sending (56), by the second offloading unit, the address-translated first packet to the second network;

wherein the second offloading algorithm comprises inputting a source IP address, a destination IP address, a source port number and a protocol number of an input packet and a first port number into a predetermined hash algorithm based on an order indicated by a first manner, performing summation on a result of the hash algorithm and an adjustable value, performing, by a result of the summation, modulo operation on N, and using a processing unit corresponding to a result of the modulo operation as a selected processing unit, wherein the adjustable value is a difference obtained by subtracting the first port number from a destination port number of the input packet, N is a quantity of the processing units comprised in the distributed device, and the at least two processing units respectively correspond to values in a range of 0 to N-1.

2. The method according to claim 1, wherein the first network is a private network, and the second network is a public network; and

the allocating (53), by the first processing unit, an IP address and a port number to the first packet comprises:

allocating, by the first processing unit, a pre-configured public network IP address to the first packet as the allocated IP address;

selecting, by the first processing unit from a port number segment corresponding to the first processing unit, a port number as a second port number, wherein the first processing unit allocates a same IP address as another processing unit in the at least two processing units, and the port number segment corresponding to the first processing unit does not overlap a port number segment corresponding to the another processing unit in the at least two processing units;

inputting, by the first processing unit, a source IP address, a destination IP address and a destination port number of the address-translated first packet and the second port number into the predetermined hash algorithm based on an order indicated by a second manner, to obtain a result of a hash operation, wherein the source IP address of the address-translated first packet is the allocated IP address, the source IP address based on the order indicated by the second manner has a same location as the destination IP address based on the order indicated by the first manner, the destination IP address based on the order indicated by the second manner has a same location as the source IP address based on the order indicated by the first manner, and the destination port number based on the order indicated by the second manner has a same location as the source port number based on the order indicated by the first manner;

calculating, by the first processing unit, a result of modulo operation performed by the result of the hash operation on N;

calculating, by the first processing unit, a difference between the result of the modulo operation and a value in a range of 0 to N-1 corresponding to the first processing unit; and

allocating, by the first processing unit, a sum of the second port number and the difference to the first packet as the allocated port number.

3. The method according to claim 2, wherein the first offloading algorithm is the same as the second offloading algorithm.

4. The method according to claim 3, wherein an input packet of the first offloading algorithm is the first packet, and the selecting (51), based on a data flow identifier of the first packet and a first offloading algorithm, a first processing unit from the at least two processing units comprises:

determining, by the first offloading unit, the first port number and the adjustable value;

inputting the source IP address, the destination IP address, and the source port number of the first packet and the first port number into the predetermined hash algorithm based on the order indicated by the first manner; and

performing summation on the result of the hash algorithm and the adjustable value, performing, by the result of the summation, the modulo operation on N, and using the processing unit corresponding to the result of the modulo operation as the first processing unit.

5. The method according to claim 1, wherein the first network is a public network, the second network is a private network, and the first packet is a packet from the public network; and

the allocating (53), by the first processing unit, an IP address and a port number to the first packet comprises:

selecting, by the first processing unit based on a load balancing policy, a first address port pair from at least one address port pair that is stored, wherein the first address port pair comprises a private network IP address and a port number;

allocating, by the first processing unit, the private network IP address in the first address port pair to the first packet as the allocated IP address;

determining, by the first processing unit, the second port number based on the source port number of the first packet;

inputting, by the first processing unit, the source IP address, the destination IP address and a destination port number of the address-translated first packet and the second port number into the predetermined hash algorithm based on an order indicated by a second manner, to obtain a result of a hash operation, wherein one of destination IP addresses of the address-translated first packet is the allocated IP address, the destination port number of the address-translated first packet is the port number in the first address port pair, the source IP address based on the order indicated by the second manner has a same location as the destination IP address based on the order indicated by the first manner, the destination IP address based on the order indicated by the second manner has a same location as the source IP address based on the order indicated by the first manner, and the destination port number based on the order indicated by the second manner has a same location as the source port number based on the order indicated by the first manner;

calculating, by the first processing unit, a result of modulo operation performed by the result of the hash operation on N;

calculating, by the first processing unit, a difference between the result of the modulo operation and a value in a range of 0 to N-1 corresponding to the first processing unit; and

allocating, by the first processing unit, a sum of the second port number and the difference to the first packet as the allocated port number.

6. The method according to claim 5, wherein an input packet of the first offloading algorithm is the first packet, and the selecting, based on a data flow identifier of the first packet and a first offloading algorithm, a first processing unit from the at least two processing units comprises:

determining, by the first offloading unit, the first port number and the adjustable value;

inputting the source IP address, the destination IP address, and the source port number of the first packet and the first port number into the predetermined hash algorithm based on the order indicated by the first manner; and

performing summation on a result of the hash algorithm and the adjustable value, performing, by a result of the summation, modulo operation on N, and using a processing unit corresponding to a result of the modulo operation as the first processing unit.

7. The method according to claim 1, wherein a third processing unit is a same processing unit as the first processing unit, and the third processing unit is a processing unit selected from the two processing units based on the data flow identifier of the reverse packet of the first packet and the second offloading algorithm.

8. The method according to claim 7, wherein the second offloading algorithm further comprises performing, by the hash algorithm, logical exclusive OR on the source IP address, the destination IP address, the source port number, the protocol number and the first port number that are input, and outputting a result of the logical exclusive OR; or performing, by the hash algorithm, byte-by-byte summation on the source IP address, the destination IP address, the source port number, the protocol number and the first port number that are input, and outputting a result of the byte-by-byte summation.

9. The method according to any one of claims 1 to 8, wherein after the allocating (53), by the first processing unit, an IP address and a port number to the first packet, the method further comprises:
establishing, by the first processing unit, a mapping entry, wherein the mapping entry comprises the data flow identifier of the first packet before the address translation and a data flow identifier of the address-translated first packet, and the mapping entry is used to perform address translation on a second packet subsequently received by the first processing unit.

10. A distributed device, wherein the distributed device is deployed between a first network and a second network, and the distributed device comprises a first offloading unit (LB 1), a second offloading unit (LB 2), and at least two processing units (SPU 1 to SPU n);

the first offloading unit (LB 1) comprises a network interface and a processor, wherein
the network interface of the first offloading unit (LB 1) is configured to receive a first packet from the first network;
the processor of the first offloading unit (LB 1) is configured to select, based on a data flow identifier of the first packet and a first offloading algorithm, a first processing unit from the at least two processing units (SPU 1 to SPU n), wherein the data flow identifier of the first packet comprises at least a source Internet Protocol IP address, a destination IP address, a source port number, and a destination port number of the first packet; and the network interface of the first offloading unit (LB 1) is further configured to send the first packet to the first processing unit;

the first processing unit comprises a network interface and a processor, wherein
the network interface of the first processing unit is configured to receive the first packet;
the processor of the first processing unit is configured to: allocate an IP address and a port number to the first packet, wherein the allocated port number satisfies a condition: Based on a data flow identifier of a reverse packet of an address-translated first packet and a second offloading algorithm, a second processing unit selected from the at least two processing units is a same processing unit as the first processing unit, a source port number of the address-translated first packet is the allocated port number, one of a source IP address and a destination IP address of the address-translated first packet is the allocated IP address, and the second offloading algorithm is an algorithm used by the second offloading unit to offload the reverse packet of the address-translated first packet; and perform address translation on the first packet, to obtain the address-translated first packet, wherein the address translation comprises replacing the source port number of the first packet with the allocated port number; and

the network interface of the first processing unit is further configured to send the address-translated first packet to the second offloading unit; and

the second offloading unit (LB 2) comprises a network interface and a processor, wherein
the network interface of the second processing unit is configured to receive the address-translated first packet; and
the processor of the second offloading unit (LB 2) is configured to instruct the network interface of the second offloading unit (LB 2) to send the address-translated first packet to the second network;

wherein the second offloading algorithm comprises inputting a source IP address, a destination IP address, a source port number and a protocol number of an input packet and a first port number into a predetermined hash algorithm based on an order indicated by a first manner, performing summation on a result of the hash algorithm and an adjustable value, performing, by a result of the summation, modulo operation on N, and using a processing unit corresponding to a result of the modulo operation as a selected processing unit, wherein the adjustable value is a difference obtained by subtracting the first port number from a destination port number of the input packet, N is a quantity of the processing units comprised in the distributed device, and the at least two processing units respectively correspond to values in a range of 0 to N-1.

11. The distributed device according to claim 10, wherein the first network is a private network, and the second network is a public network; and

the processor of the first processing unit is configured to: allocate a pre-configured public network IP address to the first packet as the allocated IP address;
select, from a port number segment corresponding to the first processing unit, a port number as a second port number, wherein the first processing unit allocates a same IP address as another processing unit in the at least two processing units, and the port number segment corresponding to the first processing unit does not overlap a port number segment corresponding to the another processing unit in the at least two processing units;
input a source IP address, a destination IP address and a destination port number of the address-translated first packet and the second port number into the predetermined hash algorithm based on an order indicated by a second manner, to obtain a result of a hash operation, wherein the source IP address of the address-translated first packet is the allocated IP address, the source IP address based on the order indicated by the second manner has a same location as the destination IP address based on the order indicated by the first manner, the destination IP address based on the order indicated by the second manner has a same location as the source IP address based on the order indicated by the first manner, and the destination port number based on the order indicated by the second manner has a same location as the source port number based on the order indicated by the first manner;
calculate a result of modulo operation performed by the result of the hash operation on N;
calculate a difference between the result of the modulo operation and a value in a range of 0 to N-1 corresponding to the first processing unit; and
allocate a sum of the second port number and the difference to the first packet as the allocated port number.

12. The distributed device according to claim 11, wherein the first offloading algorithm is the same as the second offloading algorithm, and an input packet of the first offloading algorithm is the first packet; and

the processor of the first offloading unit (LB 1) is configured to: determine the first port number and the adjustable value;

input the source IP address, the destination IP address, and the source port number of the first packet and the first port number into the predetermined hash algorithm based on the order indicated by the first manner; and

perform summation on the result of the hash algorithm and the adjustable value, perform, by the result of the summation, the modulo operation on N, and use the processing unit corresponding to the result of the modulo operation as the first processing unit.

13. The distributed device according to claim 10, wherein the first network is a public network, the second network is a private network, and the first packet is a packet from the public network; and

the processor of the first processing unit is configured to: select, based on a load balancing policy, a first address port pair from at least one address port pair that is stored, wherein the first address port pair comprises a private network IP address and a port number;

allocate the private network IP address in the first address port pair to the first packet as the allocated IP address;

determine the second port number based on the source port number of the first packet;

input the source IP address, the destination IP address and a destination port number of the address-translated first packet and the second port number into the predetermined hash algorithm based on an order indicated by a second manner, to obtain a result of a hash operation, wherein one of destination IP addresses of the address-translated first packet is the allocated IP address, the destination port number of the address-translated first packet is the port number in the first address port pair, the source IP address based on the order indicated by the second manner has a same location as the destination IP address based on the order indicated by the first manner, the destination IP address based on the order indicated by the second manner has a same location as the source IP address based on the order indicated by the first manner, and the destination port number based on the order indicated by the second manner has a same location as the source port number based on the order indicated by the first manner;

calculate a result of modulo operation performed by the result of the hash operation on N;

calculate a difference between the result of the modulo operation and a value in a range of 0 to N-1 corresponding to the first processing unit; and

allocate a sum of the second port number and the difference to the first packet as the allocated port number.

14. The distributed device according to claim 10, wherein a third processing unit is a same processing unit as the first processing unit, and the third processing unit is a processing unit selected from the two processing units based on the data flow identifier of the reverse packet of the first packet and the second offloading algorithm.

15. The distributed device according to claim 14, wherein the second offloading algorithm further comprises performing, by the hash algorithm, logical exclusive OR on the source IP address, the destination IP address, the source port number, the protocol number and the first port number that are input, and outputting a result of the logical exclusive OR; or performing, by the hash algorithm, byte-by-byte summation on the source IP address, the destination IP address, the source port number, the protocol number and the first port number that are input, and outputting a result of the byte-by-byte summation.

**Patentansprüche**

1. Paketverarbeitungsverfahren in einer verteilten Vorrichtung, wobei die verteilte Vorrichtung zwischen einem ersten Netz und einem zweiten Netz bereitgestellt ist, wobei die verteilte Vorrichtung eine erste Auslagerungseinheit, eine zweite Auslagerungseinheit und wenigstens zwei Verarbeitungseinheiten umfasst, wobei jede Verarbeitungseinheit in den wenigstens zwei Verarbeitungseinheiten mit der ersten Auslagerungseinheit und mit der zweiten Auslagerungseinheit gekoppelt ist und wobei das Verfahren Folgendes umfasst:

Empfangen (51) eines ersten Pakets von dem ersten Netz durch die erste Auslagerungseinheit und Auswählen (51) einer ersten Verarbeitungseinheit von den wenigstens zwei Verarbeitungseinheiten auf der Grundlage einer Datenflusskennung des ersten Pakets und eines ersten Auslagerungsalgorithmus, wobei die Datenflusskennung des ersten Pakets wenigstens eine Quellen-Internetprotokoll-IP-Adresse, eine Ziel-IP-Adresse, eine Quellenportnummer und eine Zielportnummer des ersten Pakets umfasst;

Senden (52) des ersten Pakets an die erste Verarbeitungseinheit durch die erste Auslagerungseinheit;

Zuordnen (53) einer IP-Adresse und einer Portnummer zu dem ersten Paket durch die erste Verarbeitungseinheit, wobei die zugeordnete Portnummer einer folgenden Bedingung genügt: auf der Grundlage einer Datenflusskennung eines Rückpakets eines ersten Pakets mit umgesetzter Adresse und eines zweiten Auslagerungsalgorithmus ist eine zweite Verarbeitungseinheit, die von den wenigstens zwei Verarbeitungseinheiten ausgewählt wird, eine selbe Verarbeitungseinheit wie die erste Verarbeitungseinheit, ist eine Quellenportnummer des ersten Pakets mit umgesetzter Adresse die zugeordnete Portnummer, ist eine Quellen-IP-Adresse oder eine Ziel-IP-Adresse des ersten Pakets mit umgesetzter Adresse die zugeordnete IP-Adresse und ist der zweite Auslagerungsalgorithmus ein Algorithmus, der durch die zweite Auslagerungseinheit verwendet wird, um das Rückpaket des ersten Pakets mit umgesetzter Adresse auszulagern;

Ausführen (54) einer Adressenumsetzung an dem ersten Paket durch die erste Verarbeitungseinheit, um das erste Paket mit umgesetzter Adresse zu erhalten, wobei die Adressenumsetzung das Ersetzen der Quellenportnummer des ersten Pakets durch die zugeordnete Portnummer umfasst;

Senden (55) des ersten Pakets mit umgesetzter Adresse an die zweite Auslagerungseinheit durch die erste Verarbeitungseinheit; und

Senden (56) des ersten Pakets mit umgesetzter Adresse an das zweite Netz durch die zweite Auslagerungseinheit;

wobei der zweite Auslagerungsalgorithmus das Eingeben einer Quellen-IP-Adresse, einer Ziel-IP-Adresse, einer Quellenportnummer und einer Protokollnummer eines eingegebenen Pakets und einer ersten Portnummer in einen vorgegebenen Hash-Algorithmus auf der Grundlage einer auf eine erste Weise eingegebenen Reihenfolge, das Ausführen einer Summation an einem Ergebnis des Hash-Algorithmus und an einem einstellbaren Wert, das Ausführen einer Modulo-Operation an N durch ein Ergebnis der Summation und das Verwenden einer Verarbeitungseinheit, die einem Ergebnis der Modulo-Operation entspricht, als eine ausgewählte Verarbeitungseinheit umfasst, wobei der einstellbare Wert eine Differenz ist, die durch Subtrahieren der ersten Portnummer von einer Zielportnummer des eingegebenen Pakets erhalten wird, N eine Anzahl der Verarbeitungseinheiten ist, die in der verteilten Vorrichtung enthalten sind, und die wenigstens zwei Verarbeitungseinheiten jeweils Werten in einem Bereich von 0 bis N-1 entsprechen.

2. Verfahren nach Anspruch 1, wobei das erste Netz ein privates Netz ist und das zweite Netz ein öffentliches Netz ist; und

wobei des Zuordnen (53) einer IP-Adresse und einer Portnummer zu dem ersten Paket durch die erste Verarbeitungseinheit Folgendes umfasst:

Zuordnen einer vorkonfigurierten IP-Adresse des öffentlichen Netzes zu dem ersten Paket als die zugeordnete IP-Adresse durch die erste Verarbeitungseinheit;

Auswählen einer Portnummer als eine zweite Portnummer aus einem Portnummernsegment, das der ersten Verarbeitungseinheit entspricht, durch die erste Verarbeitungseinheit, wobei die erste Verarbeitungseinheit eine selbe IP-Adresse wie eine andere Verarbeitungseinheit in den wenigstens zwei Verarbeitungseinheiten zuordnet und das Portnummernsegment, das der ersten Verarbeitungseinheit entspricht, ein Portnummernsegment, das der anderen Verarbeitungseinheit in den wenigstens zwei Verarbeitungseinheiten entspricht, nicht überlappt;

Eingeben einer Quellen-IP-Adresse, einer Ziel-IP-Adresse und einer Zielportnummer des ersten Pakets mit umgesetzter Adresse und der zweiten Portnummer in den vorgegebenen Hash-Algorithmus auf der Grundlage einer auf eine zweite Weise angegebenen Reihenfolge durch die erste Verarbeitungseinheit, um ein Ergebnis einer Hash-Operation zu erhalten, wobei die Quellen-IP-Adresse des ersten Pakets mit umgesetzter Adresse die zugeordnete IP-Adresse ist, die Quellen-IP-Adresse auf der Grundlage der auf die zweite Weise angegebenen Reihenfolge einen selben Ort wie die Ziel-IP-Adresse auf der Grundlage der auf die erste Weise angegebenen Reihenfolge aufweist, die Ziel-IP-Adresse auf der Grundlage der auf die zweite Weise angegebenen Reihenfolge einen selben Ort wie die Quellen-IP-Adresse auf der Grundlage der auf die erste Weise angegebenen Reihenfolge aufweist und die Zielportnummer auf der Grundlage der auf die zweite Weise angegebenen Reihenfolge einen selben Ort wie die Quellenportnummer auf der Grundlage der auf die erste Weise angegebenen Reihenfolge aufweist;

Berechnen eines Ergebnisses der durch das Ergebnis der Hash-Operation an N ausgeführten Modulo-Operation durch die erste Verarbeitungseinheit;

Berechnen einer Differenz zwischen dem Ergebnis der Modulo-Operation und einem Wert in einem Bereich von 0 bis N-1, der der ersten Verarbeitungseinheit entspricht, durch die erste Verarbeitungseinheit; und

Zuordnen einer Summe der zweiten Portnummer und der Differenz zu dem ersten Paket als die zugeordnete Portnummer durch die erste Verarbeitungseinheit.

3. Verfahren nach Anspruch 2, wobei der erste Auslagerungsalgorithmus derselbe wie der zweite Auslagerungsalgorithmus ist.

4. Verfahren nach Anspruch 3, wobei ein eingegebenes Paket des ersten Auslagerungsalgorithmus das erste Paket ist und das Auswählen (51) einer ersten Verarbeitungseinheit von den wenigstens zwei Verarbeitungseinheiten auf der Grundlage einer Datenflusskennung des ersten Pakets und eines ersten Auslagerungsalgorithmus Folgendes umfasst:

Bestimmen der ersten Portnummer und des einstellbaren Werts durch die erste Auslagerungseinheit;
Eingeben der Quellen-IP-Adresse, der Ziel-IP-Adresse und der Quellenportnummer des ersten Pakets und der ersten Portnummer in den vorgegebenen Hash-Algorithmus auf der Grundlage der auf die erste Weise angegebenen Reihenfolge; und
Ausführen einer Summation an dem Ergebnis des Hash-Algorithmus und an dem einstellbaren Wert, Ausführen der Modulo-Operation an N durch das Ergebnis der Summation und Verwenden der Verarbeitungseinheit, die dem Ergebnis der Modulo-Operation entspricht, als die erste Verarbeitungseinheit.

5. Verfahren nach Anspruch 1, wobei das erste Netz ein öffentliches Netz ist, das zweite Netz ein privates Netz ist und das erste Paket ein Paket von dem öffentlichen Netz ist; und
das Zuordnen (53) einer IP-Adresse und einer Portnummer zu dem ersten Paket durch die erste Verarbeitungseinheit Folgendes umfasst:

Auswählen eines ersten Adressenportpaars aus wenigstens einem Adressenportpaar, das gespeichert ist, auf der Grundlage einer Lastausgleichsrichtlinie durch die erste Verarbeitungseinheit, wobei das erste Adressenportpaar eine IP-Adresse des privaten Netzes und eine Portnummer umfasst;
Zuordnen der IP-Adresse des privaten Netzes in dem ersten Adressenportpaar zu dem ersten Paket als die zugeordnete IP-Adresse durch die erste Verarbeitungseinheit;
Bestimmen der zweiten Portnummer auf der Grundlage der Quellenportnummer des ersten Pakets durch die erste Verarbeitungseinheit;
Eingeben der Quellen-IP-Adresse, der Ziel-IP-Adresse und einer Zielportnummer des ersten Pakets mit umgesetzter Adresse und der zweiten Portnummer in den vorgegebenen Hash-Algorithmus auf der Grundlage einer auf eine zweite Weise angegebenen Reihenfolge durch die erste Verarbeitungseinheit, um ein Ergebnis einer Hash-Operation zu erhalten, wobei eine der Ziel-IP-Adressen des ersten Pakets mit umgesetzter Adresse die zugeordnete IP-Adresse ist, die Zielportnummer des ersten Pakets mit umgesetzter Adresse die Portnummer in dem ersten Adressenportpaar ist, die Quellen-IP-Adresse auf der Grundlage der auf die zweite Weise angegebenen Reihenfolge einen selben Ort wie die Ziel-IP-Adresse auf der Grundlage der auf die erste Weise angegebenen Reihenfolge aufweist, die Ziel-IP-Adresse auf der Grundlage der auf die zweite Weise angegebenen Reihenfolge einen selben Ort wie die Quellen-IP-Adresse auf der Grundlage der auf die erste Weise angegebenen Reihenfolge aufweist und die Zielportnummer auf der Grundlage der auf die zweite Weise angegebenen Reihenfolge einen selben Ort wie die Quellenportnummer auf der Grundlage der auf die erste Weise angegebenen Reihenfolge aufweist;
Berechnen eines Ergebnisses der Modulo-Operation, die durch das Ergebnis der Hash-Operation an N ausgeführt wird, durch die erste Verarbeitungseinheit;
Berechnen einer Differenz zwischen dem Ergebnis der Modulo-Operation und einem Wert in einem Bereich von 0 bis N-1, der der ersten Verarbeitungseinheit entspricht, durch die erste Verarbeitungseinheit; und
Zuordnen einer Summe der zweiten Portnummer und der Differenz zu dem ersten Paket als die zugeordnete Portnummer durch die erste Verarbeitungseinheit.

6. Verfahren nach Anspruch 5, wobei ein eingegebenes Paket des ersten Auslagerungsalgorithmus das erste Paket ist und das Auswählen einer ersten Verarbeitungseinheit von den wenigstens zwei Verarbeitungseinheiten auf der Grundlage einer Datenflusskennung des ersten Pakets und eines ersten Auslagerungsalgorithmus Folgendes umfasst:

Bestimmen der ersten Portnummer und des einstellbaren Werts durch die erste Auslagerungseinheit;
Eingeben der Quellen-IP-Adresse, der Ziel-IP-Adresse und der Quellenportnummer des ersten Pakets und der ersten Portnummer in den vorgegebenen Hash-Algorithmus auf der Grundlage der auf die erste Weise angegebenen Reihenfolge; und
Ausführen einer Summation an einem Ergebnis des Hash-Algorithmus und an dem einstellbaren Wert, Ausführen einer Modulo-Operation an N durch ein Ergebnis der Summation und Verwenden einer Verarbeitungseinheit, die einem Ergebnis der Modulo-Operation entspricht, als die erste Verarbeitungseinheit.

7. Verfahren nach Anspruch 1, wobei eine dritte Verarbeitungseinheit eine selbe Verarbeitungseinheit wie die erste Verarbeitungseinheit ist und die dritte Verarbeitungseinheit eine Verarbeitungseinheit ist, die auf der Grundlage der Datenflusskennung des Rückpakets des ersten Pakets und des zweiten Auslagerungsalgorithmus aus den zwei Verarbeitungseinheiten ausgewählt wird.

8. Verfahren nach Anspruch 7, wobei der zweite Auslagerungsalgorithmus ferner das Ausführen eines logischen Exklusiv-ODER an der Quellen-IP-Adresse, an der Ziel-IP-Adresse, an der Quellenportnummer, an der Protokollnummer und an der ersten Portnummer, die eingegeben werden, durch den Hash-Algorithmus und das Ausgeben eines Ergebnisses des logischen Exklusiv-ODER; oder das Ausführen einer byteweisen Summation an der Quellen-IP-Adresse, an der Ziel-IP-Adresse, an der Quellenportnummer, an der Protokollnummer und an der ersten Portnummer, die eingegeben werden, durch den Hash-Algorithmus und das Ausgeben eines Ergebnisses der byteweisen Summation umfasst.

9. Verfahren nach einem der Ansprüche 1 bis 8, wobei das Verfahren nach dem Zuordnen (53) einer IP-Adresse und einer Portnummer zu dem ersten Paket durch die erste Verarbeitungseinheit ferner Folgendes umfasst:
Festsetzen eines Abbildungseintrags durch die erste Verarbeitungseinheit, wobei der Abbildungseintrag die Datenflusskennung des ersten Pakets vor der Adressenumsetzung und eine Datenflusskennung des ersten Pakets mit umgesetzter Adresse umfasst und der Abbildungseintrag verwendet wird, um an einem zweiten Paket, das nachfolgend durch die erste Verarbeitungseinheit empfangen wird, eine Adressenumsetzung auszuführen.

10. Verteilte Vorrichtung, wobei die verteilte Vorrichtung zwischen einem ersten Netz und einem zweiten Netz bereitgestellt ist und die verteilte Vorrichtung eine erste Auslagerungseinheit (LB 1), eine zweite Auslagerungseinheit (LB 2) und wenigstens zwei Verarbeitungseinheiten (SPU 1 bis SPU n) umfasst;

wobei die erste Auslagerungseinheit (LB 1) eine Netzschnittstelle und einen Prozessor umfasst, wobei
die Netzschnittstelle der ersten Auslagerungseinheit (LB 1) konfiguriert ist, ein erstes Paket von dem ersten Netz zu empfangen;
der Prozessor der ersten Auslagerungseinheit (LB 1) konfiguriert ist, auf der Grundlage einer Datenflusskennung des ersten Pakets und eines ersten Auslagerungsalgorithmus von den wenigstens zwei Verarbeitungseinheiten (SPU 1 bis SPU n) eine erste Verarbeitungseinheit auszuwählen, wobei die Datenflusskennung des ersten Pakets wenigstens eine Quellen-Internetprotokoll-IP-Adresse, eine Ziel-IP-Adresse, eine Quellenportnummer und eine Zielportnummer des ersten Pakets umfasst; und
die Netzschnittstelle der ersten Auslagerungseinheit (LB 1) ferner konfiguriert ist, das erste Paket an die erste Verarbeitungseinheit zu senden;
die erste Verarbeitungseinheit eine Netzschnittstelle und einen Prozessor umfasst, wobei
die Netzschnittstelle der ersten Verarbeitungseinheit konfiguriert ist, das erste Paket zu empfangen;
der Prozessor der ersten Verarbeitungseinheit konfiguriert ist zum: Zuordnen einer IP-Adresse und einer Portnummer zu dem ersten Paket, wobei die zugeordnete Portnummer einer folgenden Bedingung genügt: auf der Grundlage einer Datenflusskennung eines Rückpakets eines ersten Pakets mit umgesetzter Adresse und eines zweiten Auslagerungsalgorithmus ist eine zweite Verarbeitungseinheit, die von den wenigstens zwei Verarbeitungseinheiten ausgewählt wird, eine selbe Verarbeitungseinheit wie die erste Verarbeitungseinheit, ist eine Quellenportnummer des ersten Pakets mit umgesetzter Adresse die zugeordnete Portnummer, ist eine Quellen-IP-Adresse oder eine Ziel-IP-Adresse des ersten Pakets mit umgesetzter Adresse die zugeordnete IP-Adresse und ist der zweite Auslagerungsalgorithmus ein Algorithmus, der durch die zweite Auslagerungseinheit verwendet wird, um das Rückpaket des ersten Pakets mit umgesetzter Adresse auszulagern; und Ausführen einer Adressenumsetzung an dem ersten Paket, um das erste Paket mit umgesetzter Adresse zu erhalten, wobei die Adressenumsetzung das Ersetzen der Quellenportnummer des ersten Pakets durch die zugeordnete Portnummer umfasst; und
die Netzschnittstelle der ersten Verarbeitungseinheit ferner konfiguriert ist, das erste Paket mit umgesetzter Adresse an die zweite Auslagerungseinheit zu senden; und die zweite Auslagerungseinheit (LB 2) eine Netzschnittstelle und einen Prozessor umfasst, wobei
die Netzschnittstelle der zweiten Verarbeitungseinheit konfiguriert ist, das erste Paket mit umgesetzter Adresse zu empfangen; und
der Prozessor der zweiten Auslagerungseinheit (LB 2) konfiguriert ist, die Netzschnittstelle der zweiten Auslagerungseinheit (LB 2) anzuweisen, das erste Paket mit umgesetzter Adresse an das zweite Netz zu senden;
wobei der zweite Auslagerungsalgorithmus das Eingeben einer Quellen-IP-Adresse, einer Ziel-IP-Adresse, einer Quellenportnummer und einer Protokollnummer eines eingegebenen Pakets und einer ersten Portnummer in einen vorgegebenen Hash-Algorithmus auf der Grundlage einer auf eine erste Weise angegebenen Reihenfolge, das Ausführen einer Summation an einem Ergebnis des Hash-Algorithmus und an einem einstellbaren Wert, das Ausführen einer Modulo-Operation an N durch ein Ergebnis der Summation und das Verwenden einer Verarbeitungseinheit, die einem Ergebnis der Modulo-Operation entspricht, als eine ausgewählte Verarbeitungseinheit umfasst, wobei der einstellbare Wert eine Differenz ist, die durch Subtrahieren der ersten Portnummer von einer Zielportnummer des eingegebenen Pakets erhalten wird, N eine Anzahl der Verarbeitungseinheiten ist, die in der verteilten Vorrichtung enthalten sind, und die wenigstens zwei Verarbeitungseinheiten jeweils Werten in einem Bereich von 0 bis N-1 entsprechen.

11. Verteilte Vorrichtung nach Anspruch 10, wobei das erste Netz ein privates Netz ist und das zweite Netz ein öffentliches Netz ist; und

der Prozessor der ersten Verarbeitungseinheit konfiguriert ist zum: Zuordnen einer vorkonfigurierten IP-Adresse des öffentlichen Netzes zu dem ersten Paket als die zugeordnete IP-Adresse;
Auswählen einer Portnummer als eine zweite Portnummer aus einem Portnummernsegment, das der ersten Verarbeitungseinheit entspricht, wobei die erste Verarbeitungseinheit eine selbe IP-Adresse wie eine andere Verarbeitungseinheit in den wenigstens zwei Verarbeitungseinheiten zuordnet und das Portnummernsegment, das der ersten Verarbeitungseinheit entspricht, ein Portnummernsegment, das der anderen Verarbeitungseinheit in den wenigstens zwei Verarbeitungseinheiten entspricht, nicht überlappt;
Eingeben einer Quellen-IP-Adresse, einer Ziel-IP-Adresse und einer Zielportnummer des ersten Pakets mit umgesetzter Adresse und der zweiten Portnummer in den vorgegebenen Hash-Algorithmus auf der Grundlage einer auf eine zweite Weise angegebenen Reihenfolge, um ein Ergebnis einer Hash-Operation zu erhalten, wobei die Quellen-IP-Adresse des ersten Pakets mit umgesetzter Adresse die zugeordnete IP-Adresse ist, wobei die Quellen-IP-Adresse auf der Grundlage der auf die zweite Weise angegebenen Reihenfolge einen selben Ort wie die Ziel-IP-Adresse auf der Grundlage der auf die erste Weise angegebenen Reihenfolge aufweist, die Ziel-IP-Adresse auf der Grundlage der auf die zweite Weise angegebenen Reihenfolge einen selben Ort wie die Quellen-IP-Adresse auf der Grundlage der auf die erste Weise angegebenen Reihenfolge aufweist und die Zielportnummer auf der Grundlage der auf die zweite Weise angegebenen Reihenfolge einen selben Ort wie die Quellenportnummer auf der Grundlage der auf die erste Weise angegebenen Reihenfolge aufweist;
Berechnen eines Ergebnisses der Modulo-Operation, die durch das Ergebnis der Hash-Operation an N ausgeführt wird;
Berechnen einer Differenz zwischen dem Ergebnis der Modulo-Operation und einem Wert in einem Bereich von 0 bis N-1, der der ersten Verarbeitungseinheit entspricht; und
Zuordnen einer Summe der zweiten Portnummer und der Differenz zu dem ersten Paket als die zugeordnete Portnummer.

12. Verteilte Vorrichtung nach Anspruch 11, wobei der erste Auslagerungsalgorithmus derselbe wie der zweite Auslagerungsalgorithmus ist und ein eingegebenes Paket des ersten Auslagerungsalgorithmus das erste Paket ist; und

der Prozessor der ersten Auslagerungseinheit (LB 1) konfiguriert ist zum: Bestimmen der ersten Portnummer und des einstellbaren Werts;
Eingeben der Quellen-IP-Adresse, der Ziel-IP-Adresse und der Quellenportnummer des ersten Pakets und der ersten Portnummer in den vorgegebenen Hash-Algorithmus auf der Grundlage der auf die erste Weise eingegebenen Reihenfolge; und
Ausführen einer Summation an dem Ergebnis des Hash-Algorithmus und an dem einstellbaren Wert, Ausführen der Modulo-Operation an N durch das Ergebnis der Summation und Verwenden der Verarbeitungseinheit, die dem Ergebnis der Modulo-Operation entspricht, als die erste Verarbeitungseinheit.

13. Verteilte Vorrichtung nach Anspruch 10, wobei das erste Netz ein öffentliches Netz ist, das zweite Netz ein privates Netz ist und das erste Paket ein Paket von dem öffentlichen Netz ist; und

der Prozessor der ersten Verarbeitungseinheit konfiguriert ist zum: Auswählen eines ersten Adressenportpaars aus wenigstens einem Adressenportpaar, das gespeichert ist, auf der Grundlage einer Lastausgleichsrichtlinie, wobei das erste Adressenportpaar eine IP-Adresse des privaten Netzes und eine Portnummer umfasst;
Zuordnen der IP-Adresse des privaten Netzes in dem ersten Adressenportpaar zu dem ersten Paket als die zugeordnete IP-Adresse;
Bestimmen der zweiten Portnummer auf der Grundlage der Quellenportnummer des ersten Pakets;
Eingeben der Quellen-IP-Adresse, der Ziel-IP-Adresse und einer Zielportnummer des ersten Pakets mit umgesetzter Adresse und der zweiten Portnummer in den vorgegebenen Hash-Algorithmus auf der Grundlage einer auf eine zweite Weise angegebenen Reihenfolge, um ein Ergebnis einer Hash-Operation zu erhalten, wobei eine der Ziel-IP-Adressen des ersten Pakets mit umgesetzter Adresse die zugeordnete IP-Adresse ist, die Zielportnummer des ersten Pakets mit umgesetzter Adresse die Portnummer in dem ersten Adressenportpaar ist, die Quellen-IP-Adresse auf der Grundlage der auf die zweite Weise angegebenen Reihenfolge einen selben Ort wie die Ziel-IP-Adresse auf der Grundlage der auf die erste Weise angegebenen Reihenfolge aufweist, die Ziel-IP-Adresse auf der Grundlage der auf die zweite Weise angegebenen Reihenfolge einen selben Ort wie die Quellen-IP-Adresse auf der Grundlage der auf die erste Weise angegebenen Reihenfolge aufweist und die Zielportnummer auf der Grundlage der auf die zweite Weise angegebenen Reihenfolge einen selben Ort wie die Quellenportnummer auf der Grundlage der auf die erste Weise angegebenen Reihenfolge aufweist;
Berechnen eines Ergebnisses der Modulo-Operation, die durch das Ergebnis der Hash-Operation an N ausgeführt wird;
Berechnen einer Differenz zwischen dem Ergebnis der Modulo-Operation und einem Wert in einem Bereich von 0 bis N-1, der der ersten Verarbeitungseinheit entspricht; und
Zuordnen einer Summe der zweiten Portnummer und der Differenz zu dem ersten Paket als die zugeordnete Portnummer.

14. Verteilte Vorrichtung nach Anspruch 10, wobei eine dritte Verarbeitungseinheit eine selbe Verarbeitungseinheit wie die erste Verarbeitungseinheit ist und die dritte Verarbeitungseinheit eine Verarbeitungseinheit ist, die aus den zwei Verarbeitungseinheiten auf der Grundlage der Datenflusskennung des Rückpakets des ersten Pakets und des zweiten Auslagerungsalgorithmus ausgewählt wird.

15. Verteilte Vorrichtung nach Anspruch 14, wobei der zweite Auslagerungsalgorithmus ferner das Ausführen eines logischen Exklusiv-ODER an der Quellen-IP-Adresse, der Ziel-IP-Adresse, der Quellenportnummer, der Protokollnummer und der ersten Portnummer, die eingegeben werden, durch den Hash-Algorithmus und das Ausgeben eines Ergebnisses des logischen Exklusiv-ODER; oder das Ausführen einer byteweisen Summation an der Quellen-IP-Adresse, der Ziel-IP-Adresse, der Quellenportnummer, der Protokollnummer und der ersten Portnummer, die eingegeben werden, durch den Hash-Algorithmus und das Ausgeben eines Ergebnisses der byteweisen Summation umfasst.

## Revendications

1. Procédé de traitement de paquets dans un dispositif distribué, où le dispositif distribué est déployé entre un premier réseau et un second réseau, le dispositif distribué comprend une première unité de déchargement, une deuxième unité de déchargement, et au moins deux unités de traitement, chaque unité de traitement dans les au moins deux unités de traitement est couplée à la première unité de déchargement et à la deuxième unité de déchargement, et le procédé comprend les étapes suivantes :

recevoir (51), par la première unité de déchargement, un premier paquet du premier réseau, et sélectionner (51), sur la base d'un identifiant de flux de données du premier paquet et d'un premier algorithme de déchargement, une première unité de traitement parmi les au moins deux unités de traitement, où l'identifiant de flux de données du premier paquet comprend au moins une adresse de protocole Internet IP source, une adresse IP de destination, un numéro de port source, et un numéro de port de destination du premier paquet ;
envoyer (52), par la première unité de déchargement, le premier paquet à la première unité de traitement ;
allouer (53), par la première unité de traitement, une adresse IP et un numéro de port au premier paquet, où le numéro de port alloué satisfait une condition : sur la base d'un identifiant de flux de données d'un paquet inverse d'un premier paquet à l'adresse traduite et d'un deuxième algorithme de déchargement, une deuxième unité de traitement sélectionnée parmi les au moins deux unités de traitement est une même unité de traitement que la première unité de traitement, un numéro de port source du premier paquet à l'adresse traduite est le numéro de port alloué, l'une d'une adresse IP source et d'une adresse IP de destination du premier paquet à l'adresse traduite est l'adresse IP allouée, et le deuxième algorithme de déchargement est un algorithme utilisé par la deuxième unité de déchargement pour décharger le paquet inverse du premier paquet à l'adresse traduite ;
effectuer (54), par la première unité de traitement, une traduction d'adresse sur le premier paquet, pour obtenir le premier paquet à l'adresse traduite, où la traduction d'adresse comprend le remplacement du numéro de port source du premier paquet par le numéro de port alloué ;
envoyer (55), par la première unité de traitement, le premier paquet à l'adresse traduite à la deuxième unité de déchargement ; et
envoyer (56), par la deuxième unité de déchargement, le premier paquet à l'adresse traduite au second réseau ;
où le deuxième algorithme de déchargement comprend l'entrée d'une adresse IP source, d'une adresse IP de destination, d'un numéro de port source et d'un numéro de protocole d'un paquet d'entrée et d'un premier numéro de port dans un algorithme de hachage prédéterminé sur la base d'un ordre indiqué par une première manière, l'exécution d'une sommation sur un résultat de l'algorithme de hachage et une valeur réglable, l'exécution, par un résultat de la sommation, d'une opération modulo sur N, et l'utilisation d'une unité de traitement correspondant à un résultat de l'opération modulo en tant qu'unité de traitement sélectionnée, où la valeur réglable est une différence obtenue en soustrayant le premier numéro de port d'un numéro de port de destination du paquet d'entrée, N est une quantité des unités de traitement comprises dans le dispositif distribué, et les au moins deux unités de traitement correspondent respectivement à des valeurs dans une plage s'étendant de 0 à N-1.

**2.** Procédé selon la revendication 1, dans lequel le premier réseau est un réseau privé, et le second réseau est un réseau public ; et

l'allocation (53), par la première unité de traitement, d'une adresse IP et d'un numéro de port au premier paquet comprend :

l'allocation, par la première unité de traitement, d'une adresse IP de réseau public préconfigurée au premier paquet en tant qu'adresse IP allouée ;

la sélection, par la première unité de traitement à partir d'un segment de numéro de port correspondant à la première unité de traitement, d'un numéro de port en tant que deuxième numéro de port, où la première unité de traitement alloue une même adresse IP qu'une autre unité de traitement dans les au moins deux unités de traitement, et le segment de numéro de port correspondant à la première unité de traitement ne chevauche pas un segment de numéro de port correspondant à l'autre unité de traitement dans les au moins deux unités de traitement ;

l'entrée, par la première unité de traitement, d'une adresse IP source, d'une adresse IP de destination et d'un numéro de port de destination du premier paquet à l'adresse traduite et du deuxième numéro de port dans l'algorithme de hachage prédéterminé sur la base d'un ordre indiqué par une deuxième manière, afin d'obtenir un résultat d'une opération de hachage, où l'adresse IP source du premier paquet à l'adresse traduite est l'adresse IP allouée, l'adresse IP source basée sur l'ordre indiqué par la deuxième manière a un même emplacement que l'adresse IP de destination basée sur l'ordre indiqué par la première manière, l'adresse IP de destination basée sur l'ordre indiqué par la deuxième manière a un même emplacement que l'adresse IP source basée sur l'ordre indiqué par la première manière, et le numéro de port de destination basé sur l'ordre indiqué par la deuxième manière a un même emplacement que le numéro de port source basé sur l'ordre indiqué par la première manière ;

le calcul, par la première unité de traitement, d'un résultat de l'opération modulo exécutée par le résultat de l'opération de hachage sur N ;

le calcul, par la première unité de traitement, d'une différence entre le résultat de l'opération modulo et une valeur dans une plage de 0 à N-1 correspondant à la première unité de traitement ; et

l'allocation, par la première unité de traitement, d'une somme du deuxième numéro de port et de la différence au premier paquet en tant que numéro de port alloué.

**3.** Procédé selon la revendication 2, dans lequel le premier algorithme de déchargement est le même que le deuxième algorithme de déchargement.

**4.** Procédé selon la revendication 3, dans lequel un paquet d'entrée du premier algorithme de déchargement est le premier paquet, et la sélection (51), sur la base d'un identifiant de flux de données du premier paquet et d'un premier algorithme de déchargement, d'une première unité de traitement parmi les au moins deux unités de traitement comprend :

la détermination, par la première unité de déchargement, du premier numéro de port et de la valeur réglable ;

l'entrée de l'adresse IP source, de l'adresse IP de destination et du numéro de port source du premier paquet et du premier numéro de port dans l'algorithme de hachage prédéterminé sur la base de l'ordre indiqué par la première manière ; et

l'exécution d'une sommation sur le résultat de l'algorithme de hachage et la valeur réglable, l'exécution, par le résultat de la sommation, de l'opération modulo sur N, et l'utilisation de l'unité de traitement correspondant au résultat de l'opération modulo en tant que première unité de traitement.

**5.** Procédé selon la revendication 1, dans lequel le premier réseau est un réseau public, le second réseau est un réseau privé, et le premier paquet est un paquet provenant du réseau public ; et

l'allocation (53), par la première unité de traitement, d'une adresse IP et d'un numéro de port au premier paquet comprend :

la sélection, par la première unité de traitement sur la base d'une politique d'équilibrage de charge, d'une première paire de ports d'adresse parmi au moins une paire de ports d'adresse qui est stockée, où la première paire de ports d'adresse comprend une adresse IP de réseau privé et un numéro de port ;

l'allocation, par la première unité de traitement, de l'adresse IP de réseau privé dans la première paire de ports d'adresse au premier paquet en tant qu'adresse IP allouée ;

la détermination, par la première unité de traitement, du deuxième numéro de port sur la base du numéro de port source du premier paquet ;

l'entrée, par la première unité de traitement, de l'adresse IP source, de l'adresse IP de destination et d'un numéro de port de destination du premier paquet à l'adresse traduite et du deuxième numéro de port dans l'algorithme de hachage prédéterminé sur la base d'un ordre indiqué par une deuxième manière, pour obtenir un résultat d'une opération de hachage, où l'une d'adresses IP de destination du premier paquet à l'adresse traduite est l'adresse IP allouée, le numéro de port de destination du premier paquet à l'adresse traduite est le numéro de port dans la première paire de ports d'adresse, l'adresse IP source basée sur l'ordre indiqué par la deuxième manière a un même emplacement que l'adresse IP de destination basée sur l'ordre indiqué par la première manière, l'adresse IP de destination basée sur l'ordre indiqué par la deuxième manière a un même emplacement que l'adresse IP source basée sur l'ordre indiqué par la première manière, et le numéro de port de destination basé sur l'ordre indiqué par la deuxième manière a un même emplacement que le numéro de port source basé sur l'ordre indiqué par la première manière ;

le calcul, par la première unité de traitement, d'un résultat de l'opération modulo exécutée par le résultat de l'opération de hachage sur N ;

le calcul, par la première unité de traitement, d'une différence entre le résultat de l'opération modulo et une valeur dans une plage de 0 à N-1 correspondant à la première unité de traitement ; et

l'allocation, par la première unité de traitement, d'une somme du deuxième numéro de port et de la différence au premier paquet en tant que numéro de port alloué.

6. Procédé selon la revendication 5, dans lequel un paquet d'entrée du premier algorithme de déchargement est le premier paquet, et la sélection, sur la base d'un identifiant de flux de données du premier paquet et d'un premier algorithme de déchargement, d'une première unité de traitement parmi les au moins deux unités de traitement comprend :

la détermination, par la première unité de déchargement, du premier numéro de port et de la valeur réglable ;

l'entrée de l'adresse IP source, de l'adresse IP de destination et du numéro de port source du premier paquet et du premier numéro de port dans l'algorithme de hachage prédéterminé sur la base de l'ordre indiqué par la première manière ; et

l'exécution d'une sommation sur un résultat de l'algorithme de hachage et la valeur réglable, l'exécution, par un résultat de la sommation, d'une opération modulo sur N, et l'utilisation d'une unité de traitement correspondant à un résultat de l'opération modulo en tant que première unité de traitement.

7. Procédé selon la revendication 1, dans lequel une troisième unité de traitement est une même unité de traitement que la première unité de traitement, et la troisième unité de traitement est une unité de traitement sélectionnée parmi les deux unités de traitement sur la base de l'identifiant de flux de données du paquet inverse du premier paquet et du deuxième algorithme de déchargement.

8. Procédé selon la revendication 7, dans lequel le deuxième algorithme de déchargement comprend en outre l'exécution, par l'algorithme de hachage, d'un OU exclusif logique sur l'adresse IP source, l'adresse IP de destination, le numéro de port source, le numéro de protocole et le premier numéro de port qui sont entrés, et la sortie d'un résultat du OU exclusif logique ; ou

l'exécution, par l'algorithme de hachage, d'une sommation octet par octet sur l'adresse IP source, l'adresse IP de destination, le numéro de port source, le numéro de protocole et le premier numéro de port qui sont entrés, et la sortie d'un résultat de la sommation octet par octet.

9. Procédé selon l'une quelconque des revendications 1 à 8, après l'allocation (53), par la première unité de traitement, d'une adresse IP et d'un numéro de port au premier paquet, le procédé comprenant en outre :
l'établissement, par la première unité de traitement, d'une entrée de mappage, où l'entrée de mappage comprend l'identifiant de flux de données du premier paquet avant la traduction d'adresse et un identifiant de flux de données du premier paquet à l'adresse traduite, et l'entrée de mappage est utilisée pour effectuer une traduction d'adresse sur un deuxième paquet reçu ultérieurement par la première unité de traitement.

10. Dispositif distribué, où le dispositif distribué est déployé entre un premier réseau et un second réseau, et le dispositif distribué comprend une première unité de déchargement (LB 1), une deuxième unité de déchargement (LB 2), et au moins deux unités de traitement (SPU 1 à SPU n) ;
la première unité de déchargement (LB 1) comprend une interface réseau et un processeur, où :

l'interface réseau de la première unité de déchargement (LB 1) est configurée pour recevoir un premier paquet du premier réseau ;
le processeur de la première unité de déchargement (LB 1) est configuré pour sélectionner, sur la base d'un identifiant de flux de données du premier paquet et d'un premier algorithme de déchargement, une première unité de traitement parmi les au moins deux unités de traitement (SPU 1 à SPU n), où l'identifiant de flux de données du premier paquet comprend au moins une adresse de protocole Internet IP source, une adresse IP de destination, un numéro de port source et un numéro de port de destination du premier paquet ; et
l'interface réseau de la première unité de déchargement (LB 1) est en outre configurée pour envoyer le premier paquet à la première unité de traitement ;
la première unité de traitement comprend une interface réseau et un processeur, où l'interface réseau de la première unité de traitement est configurée pour recevoir le premier paquet ;
le processeur de la première unité de traitement est configuré pour : allouer une adresse IP et un numéro de port au premier paquet, où le numéro de port alloué satisfait à une condition : sur la base d'un identifiant de flux de données d'un paquet inverse d'un premier paquet à l'adresse traduite et d'un deuxième algorithme de déchargement, une deuxième unité de traitement sélectionnée parmi les au moins deux unités de traitement est une même unité de traitement que la première unité de traitement, un numéro de port source du premier paquet à l'adresse traduite est le numéro de port alloué, l'une d'une adresse IP source et d'une adresse IP de destination du premier paquet à l'adresse traduite est l'adresse IP allouée, et le deuxième algorithme de déchargement est un algorithme utilisé par la deuxième unité de déchargement pour décharger le paquet inverse du premier paquet à l'adresse traduite ; et effectuer une traduction d'adresse sur le premier paquet, pour obtenir le premier paquet à l'adresse traduite, où la traduction d'adresse comprend le remplacement du numéro de port source du premier paquet par le numéro de port alloué ; et
l'interface réseau de la première unité de traitement est en outre configurée pour envoyer le premier paquet à l'adresse traduite à la deuxième unité de déchargement ; et
la deuxième unité de déchargement (LB 2) comprend une interface réseau et un processeur, où
l'interface réseau de la deuxième unité de traitement est configurée pour recevoir le premier paquet à l'adresse traduite ; et
le processeur de la deuxième unité de déchargement (LB 2) est configuré pour donner pour instruction à l'interface réseau de la deuxième unité de déchargement (LB 2) d'envoyer le premier paquet à l'adresse traduite au second réseau ;
dans lequel le deuxième algorithme de déchargement comprend l'entrée d'une adresse IP source, d'une adresse IP de destination, d'un numéro de port source et d'un numéro de protocole d'un paquet d'entrée et d'un premier numéro de port dans un algorithme de hachage prédéterminé sur la base d'un ordre indiqué par une première manière, l'exécution d'une sommation sur un résultat de l'algorithme de hachage et une valeur réglable, l'exécution, par un résultat de la sommation, d'une opération modulo sur N, et l'utilisation d'une unité de traitement correspondant à un résultat de l'opération modulo en tant qu'unité de traitement sélectionnée, où la valeur réglable est une différence obtenue en soustrayant le premier numéro de port d'un numéro de port de destination du paquet d'entrée, N est une quantité des unités de traitement comprises dans le dispositif distribué, et les au moins deux unités de traitement correspondent respectivement à des valeurs dans une plage de 0 à N-1.

11. Dispositif distribué selon la revendication 10, dans lequel le premier réseau est un réseau privé, et le second réseau est un réseau public ; et
le processeur de la première unité de traitement est configuré pour :

allouer une adresse IP de réseau public préconfigurée au premier paquet en tant qu'adresse IP allouée ;
sélectionner, à partir d'un segment de numéro de port correspondant à la première unité de traitement, un numéro de port en tant que deuxième numéro de port, où la première unité de traitement alloue une même adresse IP qu'une autre unité de traitement dans les au moins deux unités de traitement, et le segment de numéro de port correspondant à la première unité de traitement ne chevauche pas un segment de numéro de port correspondant à l'autre unité de traitement dans les au moins deux unités de traitement ;

entrer une adresse IP source, une adresse IP de destination et un numéro de port de destination du premier paquet à l'adresse traduite et le deuxième numéro de port dans l'algorithme de hachage prédéterminé sur la base d'un ordre indiqué par une deuxième manière, pour obtenir un résultat d'une opération de hachage, où l'adresse IP source du premier paquet à l'adresse traduite est l'adresse IP allouée, l'adresse IP source basée sur l'ordre indiqué par la deuxième manière a un même emplacement que l'adresse IP de destination basée sur l'ordre indiqué par la première manière, l'adresse IP de destination basée sur l'ordre indiqué par la deuxième manière a un même emplacement que l'adresse IP source basée sur l'ordre indiqué par la première manière, et le numéro de port de destination basé sur l'ordre indiqué par la deuxième manière a un même emplacement que le numéro de port source basé sur l'ordre indiqué par la première manière ;

calculer un résultat de l'opération modulo exécutée par le résultat de l'opération de hachage sur N ;

calculer une différence entre le résultat de l'opération modulo et une valeur dans une plage de 0 à N-1 correspondant à la première unité de traitement ; et

allouer une somme du deuxième numéro de port et de la différence au premier paquet en tant que numéro de port alloué.

12. Dispositif distribué selon la revendication 11, dans lequel le premier algorithme de déchargement est le même que le deuxième algorithme de déchargement, et un paquet d'entrée du premier algorithme de déchargement est le premier paquet ; et

le processeur de la première unité de déchargement (LB 1) est configuré pour :

déterminer le premier numéro de port et la valeur réglable ;

entrer l'adresse IP source, l'adresse IP de destination, et le numéro de port source du premier paquet et le premier numéro de port dans l'algorithme de hachage prédéterminé sur la base de l'ordre indiqué par la première manière ; et

exécuter une sommation sur le résultat de l'algorithme de hachage et la valeur réglable, exécuter, par le résultat de la sommation, l'opération modulo sur N, et utiliser l'unité de traitement correspondant au résultat de l'opération modulo en tant que première unité de traitement.

13. Dispositif distribué selon la revendication 10, dans lequel le premier réseau est un réseau public, le second réseau est un réseau privé, et le premier paquet est un paquet provenant du réseau public ; et

le processeur de la première unité de traitement est configuré pour :

sélectionner, sur la base d'une politique d'équilibrage de charge, une première paire de ports d'adresse parmi au moins une paire de ports d'adresse qui est stockée, où la première paire de ports d'adresse comprend une adresse IP de réseau privé et un numéro de port ;

allouer l'adresse IP de réseau privé dans la première paire de ports d'adresse au premier paquet en tant qu'adresse IP allouée ;

déterminer le deuxième numéro de port sur la base du numéro de port source du premier paquet ;

entrer l'adresse IP source, l'adresse IP de destination et un numéro de port de destination du premier paquet à l'adresse traduite et le deuxième numéro de port dans l'algorithme de hachage prédéterminé sur la base d'un ordre indiqué par une deuxième manière, pour obtenir un résultat d'une opération de hachage, où l'une d'adresses IP de destination du premier paquet à l'adresse traduite est l'adresse IP allouée, le numéro de port de destination du premier paquet à l'adresse traduite est le numéro de port dans la première paire de ports d'adresse, l'adresse IP source basée sur l'ordre indiqué par la deuxième manière a un même emplacement que l'adresse IP de destination basée sur l'ordre indiqué par la première manière, l'adresse IP de destination basée sur l'ordre indiqué par la deuxième manière a un même emplacement que l'adresse IP source basée sur l'ordre indiqué par la première manière, et le numéro de port de destination basé sur l'ordre indiqué par la deuxième manière a un même emplacement que le numéro de port source basé sur l'ordre indiqué par la première manière ;

calculer un résultat de l'opération modulo exécutée par le résultat de l'opération de hachage sur N ;

calculer une différence entre le résultat de l'opération modulo et une valeur dans une plage de 0 à N-1 correspondant à la première unité de traitement ; et

allouer une somme du deuxième numéro de port et de la différence au premier paquet en tant que numéro de port alloué.

14. Dispositif distribué selon la revendication 10, dans lequel une troisième unité de traitement est une même unité de traitement que la première unité de traitement, et la troisième unité de traitement est une unité de traitement sélectionnée parmi les deux unités de traitement sur la base de l'identifiant de flux de données du paquet inverse du premier paquet et du deuxième algorithme de déchargement.

**15.** Dispositif distribué selon la revendication 14, dans lequel le deuxième algorithme de déchargement comprend en outre l'exécution, par l'algorithme de hachage, d'un OU exclusif logique sur l'adresse IP source, l'adresse IP de destination, le numéro de port source, le numéro de protocole et le premier numéro de port qui sont entrés, et la sortie d'un résultat du OU exclusif logique ; ou l'exécution, par l'algorithme de hachage, d'une sommation octet par octet sur l'adresse IP source, l'adresse IP de destination, le numéro de port source, le numéro de protocole et le premier numéro de port qui sont entrés, et la sortie d'un résultat de la sommation octet par octet.

FIG. 1

FIG. 2

FIG. 3

FIG. 4

51

A first offloading unit of a distributed device receives a first packet from a first network, and selects, based on a data flow identifier of the first packet and a first offloading algorithm, a first processing unit from at least two processing units

52

The first offloading unit sends the first packet to the first processing unit

53

The first processing unit allocates an IP address and a port number to the first packet, where the allocated port number satisfies a condition: Based on a data flow identifier of a reverse packet of an address-translated first packet and a second offloading algorithm, a second processing unit selected from the at least two processing units is a same processing unit as the first processing unit, and the second offloading algorithm is an algorithm used by the second offloading unit to offload the reverse packet of the address-translated first packet

54

The first processing unit performs address translation on the first packet, to obtain the translated first packet, where the address translation includes replacing a source port number of the first packet with the allocated port number

55

The first processing unit sends the address-translated first packet to a second offloading unit

56

The second offloading unit sends the address-translated first packet to the second network

FIG. 5

FIG. 6

NAT

Host in a
local area
network

LB 1

SPU 5

LB 2

Server in
the Internet

71: Send a
first packet

72: Under a condition that a data
flow identifier of the first packet is
not stored in an offloading table,
input the first packet into an
offloading algorithm, and select,
based on an output result of the
offloading algorithm, a processing
unit SPU 5 from a plurality of
processing units of a NAT device

73: Send the
first packet

74: The SPU 5 allocates an IP
address and a port number to the
first packet

75: The SPU 5 performs address
translation on the first packet

76: Send an
address-translated
first packet

77: Send the
address-
translated
first packet

78: The SPU 5 establishes a new
entry in an address mapping table

79: Receive a
second packet

TO
FIG. 7B

TO
FIG. 7B

TO
FIG. 7B

TO
FIG. 7B

TO
FIG. 7B

FIG. 7A

CONT.
FROM
FIG. 7A

CONT.
FROM
FIG. 7A

CONT.
FROM
FIG. 7A

CONT.
FROM
FIG. 7A

CONT.
FROM
FIG. 7A

710: Under a condition that a data flow identifier of the second packet is not stored in the offloading table, input the second packet into a pre-determined offloading algorithm, and select, based on an output result of the offloading algorithm, the processing unit SPU 5 from the plurality of processing units of the NAT device

711: Send the second packet

712: Search the address mapping table, and perform address translation on the second packet based on an entry that is found

713: Send an address-translated second packet

714: Send the address-translated second packet

FIG. 7B

45

FIG. 8

SLB

Server in
a local
area
network

LB 1                    SPU 3                    LB 2

Host in
the
Internet

91: Send a
first packet

92: Under a condition that a data
flow identifier of the first packet is
not stored in an offloading table,
input the first packet into an
offloading algorithm, and select,
based on an output result of the
offloading algorithm, a processing
unit SPU 3 from a plurality
processing units of an SLB device

93: Send the
first packet

94: The SPU 3 allocates an IP address
and a port number to the first packet

95: The SPU 3 performs address
translation on the first packet

97: Send the
address-translated
first packet

96: Send an
address-translated
first packet

98: The SPU 3 establishes a new
entry in an address mapping table

99: Receive a
second packet

TO
FIG. 9B

TO
FIG. 9B

TO
FIG. 9B

TO
FIG. 9B

TO
FIG. 9B

FIG. 9A

CONT.
FROM
FIG. 9A

CONT.
FROM
FIG. 9A

CONT.
FROM
FIG. 9A

CONT.
FROM
FIG. 9A

CONT.
FROM
FIG. 9A

910: Under a condition that a data flow identifier of the second packet is not stored in the offloading table, input the second packet into the offloading algorithm, and select, based on an output result of the offloading algorithm, the processing unit SPU 3 from the plurality of processing units of the SLB device

911: Send the second packet

912: Search the address mapping table, and perform address translation on the second packet based on an entry that is found

913: Send an address-translated second packet

914: Send the address-translated second packet

FIG. 9B

FIG. 10

**EP 3 780 552 B1**

**REFERENCES CITED IN THE DESCRIPTION**

**Patent documents cited in the description**

- US 2010061380 A1
- US 2017078245 A1